# FASCICULE DE BREVET EUROPEEN

(11) **EP 3 707 900 B1**
(45) Date de publication et mention de la délivrance du brevet: **29.11.2023**
(21) Numéro de dépôt: 19753263.3
(22) Date de dépôt: 26.07.2019
(51) Int. Cl.: H04N 19/132, H04N 19/139, H04N 19/179, H04N 21/2343, H04N 21/4402, H04N 21/81, H04N 19/85

(54) **PROCÉDÉ DE FORMATION D'UNE SÉQUENCE D'IMAGES DE SORTIE À PARTIR D'UNE SÉQUENCE D'IMAGES D'ENTRÉE, PROCÉDÉ DE RECONSTRUCTION D'UNE SÉQUENCE D'IMAGES D'ENTRÉE À PARTIR D'UNE SÉQUENCE D'IMAGES DE SORTIE, DISPOSITIFS, EQUIPEMENT SERVEUR, EQUIPEMENT CLIENT ET PROGRAMMES D'ORDINATEURS ASSOCIÉS**
VERFAHREN ZUR FORMUNG EINER AUSGANGSBILDSEQUENZ AUS EINER EINGANGSBILDSEQUENZ, VERFAHREN ZUR REKONSTRUKTION EINER EINGANGSBILDSEQUENZ AUS EINER AUSGANGSBILDSEQUENZ, ZUGEHÖRIGE VORRICHTUNGEN, SERVERAUSRÜSTUNG, CLIENT-AUSRÜSTUNG UND COMPUTERPROGRAMME
METHOD FOR FORMING AN OUTPUT IMAGE SEQUENCE FROM AN INPUT IMAGE SEQUENCE, METHOD FOR RECONSTRUCTING AN INPUT IMAGE SEQUENCE FROM AN OUTPUT IMAGE SEQUENCE, ASSOCIATED DEVICES, SERVER EQUIPMENT, CLIENT EQUIPMENT AND COMPUTER PROGRAMS

(30) Priorité: 30.07.2018 FR 1857078
(43) Date de publication de la demande: 16.09.2020
(73) Titulaire: Fondation B-COM, 35510 Cesson-Sévigné (FR)
(72) Inventeur: AUBIE, Jean-Yves, 35520 MELESSE (FR); HAMIDOUCHE, Wassim, 35235 THORIGNE-FOUILLARD (FR); DUMENIL, Patrick, 35830 BETTON (FR); HERROU, Glenn, 35000 RENNES (FR)
(74) Mandataire: Jacobacci Coralis Harle
(86) Numéro de dépôt international: PCT/EP2019/070290
(87) Numéro de publication internationale: WO 2020/025510

(56) Documents cités:
- EP-A1- 3 041 233
- John W. Woods: "Digital Video Compression" In: "Multidimensional Signal, Image, and Video Processing and Coding", 1 janvier 2012 (2012-01-01), Elsevier, XP055589938, ISBN: 978-0-12-381420-3 pages 467-528, DOI: 10.1016/B978-0-12-381420-3.00012-6, page 508, dernier alinéa - page 510, alinéa 1
- YU JIADI ET AL: "Sensing Human-Screen Interaction for Energy-Efficient Frame Rate Adaptation on Smartphones", IEEE TRANSACTIONS ON MOBILE COMPUTING, IEEE SERVICE CENTER, LOS ALAMITOS, CA, US, vol. 14, no. 8, 1 août 2015 (2015-08-01), pages 1698-1711, XP011662310, ISSN: 1536-1233, DOI: 10.1109/TMC.2014.2352862 [extrait le 2015-06-30]
- Sergios Theodoridis ET AL: "Introduction" In: "Pattern Recognition", 26 novembre 2008 (2008-11-26), Elsevier/Acad. Press, Amsterdam [u.a.] 034722, XP055590076, ISBN: 978-1-59749-272-0 pages 1-12, page 5, dernier alinéa - page 8, dernière ligne

## Description

### 1. Domaine de l'invention

Le domaine de l'invention est celui de la compression, de la transmission et du stockage de contenus vidéo, en particulier de l'adaptation aux ressources matérielles disponibles.

L'invention peut notamment, mais non exclusivement, s'appliquer au traitement de contenus vidéo qui présentent une résolution spatiale élevée sur un réseau à capacité limitée.

### 2. Présentation de l'art antérieur

Traditionnellement, les techniques utilisées pour la diffusion font appel à une compression à débit variable, notamment en télévision sur réseau terrestre ou satellite. Dans ce cas, le format de la vidéo est unique et on adapte le débit au contenu à coder. Cette technique éprouvée a pour principal inconvénient de n'être applicable que dans une plage de débit réduite.

Une autre technique connue sous le nom de débit adaptatif ou ABR (pour « Adaptive Bit Rate », en anglais) consiste à stocker dans le réseau plusieurs flux encodés avec différentes résolutions temporelles et spatiales. Le flux est découpé en segments. Un équipement client choisit la version du flux qui lui convient en fonction de ses capacités et celles du réseau. Il peut en changer au cours du temps, à l'occasion de la livraison d'un nouveau segment pour suivre au mieux les variations de capacité du réseau. Cette solution est notamment bien adaptée à une livraison de contenu vidéo de type « streaming » sur IP en utilisant un protocole de transport de type http en mode OTT (pour « Over The Top », en anglais).

Un inconvénient de cette technique est qu'elle est coûteuse en ressources, du fait qu'elle nécessite de coder, stocker et transmettre plusieurs versions d'un même contenu.

Il existe également des standards de compression dits échelonnables (pour « scalable», en anglais) qui produisent pour un même contenu vidéo plusieurs flux de données codées complémentaires, comprenant une couche de base et une ou plusieurs couches d'amélioration. Le client peut décoder la couche de base seule pour obtenir une version basse résolution ou basse qualité du contenu vidéo ou, s'il dispose des ressources suffisantes, décoder une ou plusieurs couches d'amélioration, qui sont exploitées par le décodeur pour produire une séquence décodée de résolution/qualité accrues.

Ces techniques « échelonnables » ont souvent été boudées par les industriels qui les considèrent comme trop compliquées à mettre en oeuvre (taille mémoire importante, latence accrue, etc.) pour un bénéfice limité, puisqu'il faut là-aussi que le réseau soit capable de transmettre l'ensemble des couches composant le flux, laissant le choix au récepteur de n'utiliser que celles jugées utiles ou accessibles.

Aujourd'hui, la diffusion de contenus vidéo de haute résolution spatiale et temporelle se généralise car elle offre aux clients une meilleure qualité visuelle et notamment une meilleure perception des détails. Néanmoins, tous les équipements de la chaîne de transmission ne supportent pas encore ces nouveaux formats de contenus vidéo et, même pour ceux qui le supportent, la transmission de ces contenus nécessite des ressources de calcul, stockage et bande passante très élevées.

On connaît de la demande de brevet publiée sous le numéro WO2017/129568 une méthode de codage d'une séquence d'images qui réalise une décomposition spatiale de chacune des images en N sous-images et forme une séquence de résolution temporelle N fois supérieure à l'aide des sous-images obtenues. La séquence de sous-images est codée à l'aide d'un codeur standard et des données de signalisation supplémentaires sont générées afin qu'un décodeur puisse reconstruire une séquence décodée aux résolutions spatiale et temporelle de la séquence originale.

Un avantage de cette méthode est qu'elle permet d'utiliser un codeur de résolution spatiale plus faible tout en restituant le contenu vidéo à sa résolution spatiale d'origine. Elle est en outre échelonnable, car elle permet au décodeur de reconstruire une séquence d'images avec une résolution spatiale réduite de N, par exemple au format HD à partir d'une séquence d'entrée au format UHD.

Un inconvénient de cette méthode est qu'elle multiplie systématiquement la résolution temporelle des images de la séquence d'entrée par un facteur N, avec N entier supérieur ou égal à 2.

On connaît aussi de la demande EP3041233 une méthode pour transmettre un contenu vidéo de haute qualité tout en préservant les détails de l'image, même en cas de fort mouvement. La séquence d'entrée est « hybride » au sens où elle comprend des sous-séquences désignées comme représentatives d'une scène statique et des sous-séquences désignées comme représentatives d'une scène de mouvement. La méthode décrite prétraite la séquence d'entrée en fonction de l'information de désignation du type de scène reçue. Une sous-séquence correspondant à une scène statique du contenu est codée avec une résolution spatiale élevée, par exemple UHD et une résolution temporelle faible, par exemple 30 fps (pour « frame per second », en anglais), tandis qu'une sous-séquence associée à une scène de mouvement est codée avec une résolution spatiale N fois plus faible, par exemple HD, mais avec une résolution temporelle N fois plus élevée, égale à 120 fps. En outre, N images de résolution spatiale N fois plus faibles, sont encapsulées sous formes de tuiles (pour « tiles », en anglais) à l'intérieur d'une seule image de résolution spatiale N fois plus élevée. De la sorte, la séquence à coder est dans tous les cas une séquence de résolution spatiale élevée et de résolution temporelle faible, ce qui permet de moins impacter les équipements intermédiaires de la chaîne de transmission qui doivent toutefois supporter la résolution spatiale requise. Côté décodeur, une information de désignation de type de scène par sous-séquence, contenue dans le flux de données codées, lui permet de déterminer quel post-traitement appliquer aux images décodées pour reconstruire une séquence de sortie.

La prise en compte du type de scène permet de garantir un niveau de qualité perçu de la séquence décodée. A l'inverse de la méthode précédemment décrite, le codeur utilisé code systématiquement des images à la résolution spatiale maximale et à la résolution temporelle minimale. En revanche, le recours à des tuiles et le positionnement des images de la séquence de plus faible résolution spatiale à l'intérieur d'une image de plus grande résolution spatiale contraignent la prédiction inter images et impactent l'efficacité de compression. En outre, la complexité du codeur et du décodeur n'est pas réduite.

### 3. Inconvénients de l'art antérieur

Aucun des documents de l'art antérieur ne fournit une solution de transmission et/ou de stockage d'un contenu vidéo de résolutions spatiale et temporelle élevées qui soit à la fois plus économe en ressources et performante.

### 4. Objectifs de l'invention

L'invention vient améliorer la situation.

L'invention a notamment pour objectif de pallier ces inconvénients de l'art antérieur.

Plus précisément, un objectif de l'invention est de proposer une solution qui permettre de limiter les ressources nécessaires à l'encodage, au stockage ou à la transmission d'un contenu vidéo à hautes résolutions spatiale et temporelle, tout en préservant l'efficacité de compression et la qualité perçue par l'utilisateur final.

Un autre objectif de l'invention est de proposer une solution de codage qui soit en plus échelonnable.

### 5. Exposé de l'invention

Ces objectifs, ainsi que d'autres qui apparaîtront par la suite, sont atteints à l'aide d'un procédé de formation d'une séquence d'images, dite séquence de sortie, à partir d'une séquence d'images d'entrée, ladite séquence d'image d'entrée ayant une résolution spatiale d'entrée et une résolution temporelle d'entrée, ladite séquence de sortie ayant une résolution temporelle de sortie égale à la résolution temporelle d'entrée et une résolution spatiale de sortie égale à une fraction prédéterminée de la résolution spatiale d'entrée par un nombre entier supérieur ou égal à 2, ledit procédé comprenant les étapes suivantes, mises en oeuvre pour une sous-séquence de la séquence d'entrée, dite sous-séquence courante et comprenant un nombre prédéterminé d'images :
- Obtention d'une fréquence temporelle, dite fréquence d'images, associée à la sous-séquence courante;
- Traitement de la sous-séquence d'entrée courante, comprenant :
   ∘ Sous-échantillonnage temporel de la sous-séquence courante avec un taux de sous-échantillonnage temporel compris entre 1 et la fraction prédéterminée, décroissant avec la fréquence image obtenue, et formation d'une deuxième sous-séquence ayant une deuxième résolution temporelle;
   ∘ Sous-échantillonnage spatial de la deuxième sous-séquence formée avec un taux de sous échantillonnage spatial compris entre 1 et la fraction prédéterminée, croissant avec la fréquence d'images, de sorte qu'un produit des taux d'échantillonnage temporel et spatial soit égal à la fraction prédéterminée et formation d'une troisième sous-séquence ayant une troisième résolution spatiale ;
   ∘ Lorsque la troisième résolution spatiale est supérieure à la résolution spatiale de sortie, décomposition spatiale des images de la troisième sous-séquence en au moins deux sous-images et au plus N sous-images de résolution spatiale égale à la résolution spatiale de sortie et formation de la sous-séquence d'images de sortie par insertion temporelle des sous-images issues de la décomposition entre l'image décomposée et l'image suivante; et
- Insertion de la sous-séquence de sortie et de la fréquence image associée dans un conteneur de sortie.

L'invention propose une approche tout-à-fait nouvelle et inventive du traitement d'une séquence d'images de résolution spatiale élevée, qui consiste à découper la séquence en sous-séquences et à appliquer successivement à chaque sous-séquence un traitement temporel et spatial, qui tient compte d'une fréquence image associée à la sous-séquence et représentative de son contenu, de sorte à former une sous-séquence d'images de résolution spatiale réduite d'une fraction prédéterminée et de résolution temporelle inchangée.

La séquence obtenue est insérée dans un conteneur de sortie qui comprend en outre l'information de fréquence image, afin qu'un équipement récepteur puisse réaliser un post traitement inverse et récupérer la séquence d'images d'entrée.

Contrairement à l'art antérieur, tout traitement ultérieur de la séquence de sous-images obtenue, que ce soit un stockage ou un encodage ou encore une transmission sur un réseau de transmission, est rendu moins complexe du fait de sa résolution spatiale réduite. A titre d'exemple, si la vidéo de départ est au format UHD, le stockage et le codage se feront sur un format HD pour le même nombre d'images, soit une réduction de la quantité d'information d'un rapport 4.

Selon un aspect de l'invention, le procédé comprend en outre une étape de codage de la sous-séquence formée et de l'information de fréquence image associée et en ce que l'étape d'insertion insère les données codées dans le conteneur de sortie.

La séquence de sortie présentant un format classique, un codage standard peut lui être appliqué pour réduire le débit nécessaire à la représentation de la vidéo, ce qui permet de garantir l'efficacité de compression.

Selon encore un autre aspect de l'invention, l'étape d'obtention d'une fréquence d'images associée à la sous-séquence courante comprend les sous-étapes suivantes:
- Extraction d'un vecteur de caractéristiques par image et formation d'un vecteur de caractéristiques de la sous-séquence courante à partir des N vecteurs ;
- Prédiction d'une classe de mouvement de la sous-séquence courante à l'aide du vecteur formé et d'un système de prédiction automatique supervisé ;
- Détermination d'une fréquence d'image associée à la classe de mouvement prédite.

En variante, le procédé peut comprendre en outre une étape préalable de détermination de la fréquence d'images pour au moins ladite sous-séquence de la séquence d'entrée, ladite étape préalable comprenant les étapes suivantes :
- Extraction pour chaque image d'au moins une partie des images de ladite sous-séquence, d'au moins un premier et un deuxième ensemble de caractéristiques ;
- Formation pour ladite sous-séquence, d'un premier vecteur de caractéristiques à partir d'au moins une partie des premiers ensembles de caractéristiques extraits pour les images considérées et d'un deuxième vecteur de caractéristiques à partir d'au moins une partie des deuxièmes ensembles de caractéristiques extraits pour les images considérées ;
- Prédiction d'une classe de mouvement de la sous-séquence considérée à l'aide d'au moins une première et une deuxième méthode de classification, la première méthode étant apte à partir du premier vecteur de caractéristiques de sélectionner au moins une première classe de mouvement ou non pour ladite sous-séquence, la deuxième méthode étant apte, si ladite première classe de mouvement n'est pas sélectionnée, à sélectionner au moins une deuxième ou une troisième classe de mouvement ;
- Obtention de la fréquence d'images associée à la classe de mouvement sélectionnée.

Un avantage est que la prédiction d'une classe de mouvement permet de déterminer une fréquence d'images associée à la sous-séquence qui est adaptée à la variation de son contenu. De la sorte, le prétraitement spatio-temporel qui lui est appliqué préserve ses caractéristiques essentielles.

Pour une scène de mouvement, la fréquence d'images associée à la sous-séquence est élevée et la résolution temporelle est préservée, de façon à suivre le mouvement. En revanche, la résolution spatiale est réduite, puisque l'œil humain ne percevra pas aussi bien les détails de la scène du fait du mouvement. Pour une scène statique, au contraire, la fréquence d'images associée à la sous-séquence est faible et la sous-séquence d'entrée est sous-échantillonnée temporellement. En revanche, la résolution spatiale est préservée, de façon à garantir un rendu de qualité des détails de la scène.

Ainsi, l'invention adapte le prétraitement appliqué à la sous-séquence notamment à la quantité de mouvement présente dans la scène et à ses variations de texture.

Selon encore un autre aspect de l'invention, le procédé comprend en outre une étape d'obtention d'une information représentative d'une interaction d'un utilisateur avec la sous-séquence formée et une étape de décision de modification de la fréquence d'images obtenue en fonction de ladite information obtenue.

Un avantage est qu'on peut par exemple forcer une fréquence d'images élevée lorsque l'utilisateur interagit avec le contenu. De la sorte, on garantit que le prétraitement appliqué à la sous-séquence courante préserve la résolution temporelle du contenu. Ce mode de réalisation concerne un cas d'usage de l'invention impliquant un visiocasque dans un contexte de réalité virtuelle, augmentée ou mixte. Le visiocasque est connecté à un équipement serveur qui stocke la séquence d'entrée et forme une séquence de sortie à la volée en fonction des interactions de l'utilisateur avec son environnement virtuel. A chaque fois que l'utilisateur interagit avec la scène, celle-ci est modifiée, il faut reconstruire le rendu de la scène qu'il visualise sur son écran. Cet aspect de l'invention permet d'améliorer la réactivité du rendu en prenant en compte les déplacements de la tête de l'utilisateur. En effet, le fait d'augmenter la fréquence image contribue à la réduction de la latence entre le mouvement et sa prise en compte dans l'affichage du casque. Procédé de formation selon la revendication précédente, caractérisé en ce que l'étape d'obtention comprend l'obtention d'une information de détection d'un mouvement de tête de l'utilisateur et l'étape d'augmentation comprend un positionnement de la fréquence d'images associée à la sous-séquence courante à une valeur maximale.

En effet, lorsque l'utilisateur fait un mouvement de tête il ne visualise plus la même partie de la scène et il faut mettre à jour le rendu affiché par le visiocasque en temps réel. Avantageusement, la détection de ce mouvement est prise en compte par le procédé selon l'invention dans une logique de « ou » inclusif. Par exemple, en cas de mouvement de la tête de l'utilisateur, la fréquence d'images est simplement positionnée à sa valeur maximale, indépendamment de la nature de la scène affichée. De la sorte, la sous-séquence formée ne subira aucun sous-échantillonnage temporel pour garantir une bonne fluidité et une bonne qualité du rendu de la scène.

Selon encore un autre aspect de l'invention, la fraction prédéterminée (1/N) vaut ¼, les étapes de sous-échantillonnage spatial et temporel comprennent trois valeurs de taux de sous-échantillonnage distinctes et l'étape de détermination d'une fréquence d'images choisit une fréquence d'image parmi trois fréquences distinctes.

Un avantage est qu'on a 3 niveaux possibles de résolution spatiale et temporelle, qui sont 1, ½ et ¼. Ce mode de réalisation est particulièrement adapté à une séquence d'images d'entrée de résolution spatiale UHD, égale à 3840x2160 pixels et de résolution temporelle égale à 120 fps (pour « frames per second », en anglais). La séquence de sortie est au format HD égal à 1920x1080 pixels et à la résolution temporelle de 120 fps. La fréquence d'images déterminée peut valoir 30, 60 ou 120 fps.

Selon une variante, on peut choisir une fraction égale à 1/8 et utiliser 4 niveaux de sous-échantillonnage spatial et temporel qui sont 1, ½, ¼ et ⅛. Cette configuration est particulièrement adaptée à une séquence d'images d'entrée de résolution spatiale 8K égale à 7680x4320 pixels et à une résolution temporelle égale à 240 fps. La séquence de sortie est alors aussi au format égal à 1920x1080 pixels et à la résolution temporelle de 240 fps.

Corrélativement, l'invention concerne un procédé de reconstruction d'une séquence d'images, dite séquence d'entrée, ayant une résolution spatiale d'entrée et une résolution temporelle d'entrée, à partir d'un conteneur de sortie, comprenant une séquence de sortie ayant une résolution spatiale de sortie égale à N fois la résolution spatiale d'entrée avec un entier supérieur ou égal à 2 et une résolution temporelle de sortie égale à la résolution temporelle d'entrée.

Ladite séquence étant découpée temporellement en une pluralité de sous-séquences, ledit procédé comprend les étapes suivantes mises en oeuvre pour une sous-séquence de la séquence de sortie, dite sous-séquence courante et comprenant un nombre prédéterminé d'images:
- Obtention à partir du conteneur de sortie de la sous-séquence de la séquence de sortie et obtention d'une information représentative d'une fréquence image associée à ladite sous-séquence courante ;
- Traitement de la sous-séquence courante comprenant :
   ∘ Lorsque la sous-séquence courante a une fréquence image associée qui est inférieure à la résolution temporelle de sortie, recomposition spatiale d'au moins deux images successives de la sous-séquence en une image de deuxième résolution spatiale supérieure à la résolution spatiale d'entrée (RSE) et inférieure ou égale à la résolution spatiale de sortie de sorte à former une deuxième sous-séquence courante d'images de deuxième résolution temporelle égale à la fréquence image;
   ∘ Lorsque la deuxième résolution spatiale est inférieure à la résolution spatiale de sortie, sur-échantillonnage spatial des images de la deuxième sous-séquence courante avec un taux de sur-échantillonnage spatial compris entre 1 et le nombre entier, qui croît avec la fréquence image, de sorte à obtenir une troisième sous-séquence courante de résolution spatiale égale à la résolution spatiale de sortie ; et
   ∘ Lorsque la deuxième résolution temporelle de la troisième sous-séquence courante est inférieure à la résolution temporelle d'entrée, reconstruction de la sous-séquence courante d'entrée par recopie temporelle d'au moins une image de la troisième sous-séquence entre deux images successives de la sous-séquence de sorte à obtenir une sous-séquence ayant la résolution temporelle d'entrée.

Côté décodeur, l'information de fréquence image associée à une sous-séquence de la séquence de sortie reçue permet à un récepteur de réaliser les opérations inverses de celles du prétraitement et de reconstruire la séquence d'images d'entrée.

Un autre avantage de l'invention est qu'elle est naturellement échelonnable sans pour autant mettre en oeuvre des techniques complexes telles que celles proposées dans les standards SVC et SHVC.

Un exemple qui ne fait pas partie de l'invention revendiquée concerne aussi un procédé de reconstruction partielle d'une séquence d'images d'entrée ayant une résolution spatiale d'entrée et une résolution temporelle d'entrée , à partir d'un conteneur de sortie, comprenant une séquence de sortie ayant une résolution spatiale de sortie comprenant une séquence de sortie ayant une résolution spatiale de sortie égale à N fois la résolution spatiale d'entrée avec un entier supérieur ou égal à 2 et une résolution temporelle de sortie égale à la résolution temporelle d'entrée, caractérisé en ce que, ladite séquence étant découpée temporellement en une pluralité de sous-séquences, ledit procédé comprend les étapes suivantes, mises en oeuvre par sous-séquence :
- Obtention à partir du conteneur de sortie d'une position d'une sous-séquence de la séquence de sortie, dite sous-séquence courante;
- Traitement de la sous-séquence courante comprenant une extraction d'une première image de la sous-séquence ; et
- Formation d'une séquence d'entrée partielle par insertion de la première image de la sous-séquence courante.

Cet exemple permet ainsi à un équipement client récepteur de ne traiter que les images correspondant à la plus basse résolution spatiale et temporelle, ce qui correspond à une qualité minimale lorsque la résolution d'affichage ou la capacité de calcul du récepteur ne permettent pas de traiter le flux complet correspondant à la qualité maximale.

Il est en outre possible d'utiliser une meilleure protection contre les erreurs sur les images à la plus basse résolution spatiale et temporelle de manière à pouvoir assurer une qualité de décodage minimale en cas de perturbation du canal de transmission.

Selon un autre aspect de l'invention, le conteneur comprenant des données codées, le procédé comprend une étape de décodage de données codées de la séquence de sortie.

Avantageusement, le décodage comprend au moins, pour une sous-séquence, le décodage de la première image.

L'invention concerne également un dispositif de formation d'une séquence de sortie adapté pour mettre en oeuvre le procédé de formation selon l'un quelconque des modes particuliers de réalisation définis ci-dessus. Ce dispositif pourra bien sûr comporter les différentes caractéristiques relatives au procédé de formation selon l'invention. Ainsi, les caractéristiques et avantages de ce dispositif sont les mêmes que ceux du procédé de formation, et ne sont pas détaillés plus amplement. Selon un mode particulier de réalisation de l'invention, un tel dispositif est compris dans un équipement émetteur, tel qu'un équipement serveur ou un équipement terminal.

L'invention concerne également un dispositif de reconstruction adapté pour mettre en oeuvre le procédé de reconstruction selon l'un quelconque des modes particuliers de réalisation définis ci-dessus. Ce dispositif de reconstruction pourra bien sûr comporter les différentes caractéristiques relatives au procédé de codage selon l'invention. Ainsi, les caractéristiques et avantages de ce dispositif de codage sont les mêmes que ceux du procédé de codage, et ne sont pas détaillés plus amplement.

L'invention concerne aussi un dispositif de reconstruction partielle adapté pour mettre en oeuvre le procédé de reconstruction partielle selon l'invention. Ce dispositif de reconstruction pourra bien sûr comporter les différentes caractéristiques relatives au procédé de reconstruction partielle selon l'invention. Ainsi, les caractéristiques et avantages de ce dispositif sont les mêmes que ceux du procédé de reconstruction partielle, et ne sont pas détaillés plus amplement.

L'invention concerne aussi un équipement émetteur, comprenant un module d'obtention d'une séquence d'images d'entrée, un dispositif de formation d'une séquence d'images de sortie selon l'invention, un module de stockage d'un conteneur de sortie comprenant la séquence de sortie et un module d'émission du conteneur de sortie par l'intermédiaire d'un réseau de communication.

L'invention concerne aussi un équipement récepteur comprenant un module de réception de données par l'intermédiaire d'un réseau de communication, apte à recevoir un conteneur de sortie comprenant une séquence d'images de sortie et un dispositif de reconstruction, partielle ou non, d'une séquence d'entrée à partir de la séquence de sortie selon l'un quelconque des modes de réalisation de l'invention.

L'invention concerne aussi un programme d'ordinateur comportant des instructions pour la mise en oeuvre des étapes d'un procédé de formation d'une séquence de sortie tel que décrit précédemment, lorsque ce programme est exécuté par un processeur et un programme d'ordinateur comportant des instructions pour la mise en oeuvre des étapes d'un procédé de reconstruction ou de reconstruction partielle d'une séquence d'entrée tels que décrits précédemment, lorsque ce programme est exécuté par un processeur

Ces programmes peuvent utiliser n'importe quel langage de programmation. Ils peuvent être téléchargés depuis un réseau de communication et/ou enregistrés sur un support lisible par ordinateur.

L'invention se rapporte enfin à des supports d'enregistrement, lisibles par un processeur, intégrés ou non au dispositif de formation d'une séquence d'images de sortie et aux dispositifs de reconstruction selon l'invention, éventuellement amovible, mémorisant respectivement un programme d'ordinateur mettant en oeuvre un procédé de formation et un programme d'ordinateur mettant en oeuvre un procédé de reconstruction, tel que décrits précédemment.

### 6. Liste des figures

D'autres avantages et caractéristiques de l'invention apparaîtront plus clairement à la lecture de la description suivante d'un mode de réalisation particulier de l'invention, donné à titre de simple exemple illustratif et non limitatif, et des dessins annexés, parmi lesquels :
- la figure **1** illustre de façon schématique les étapes d'un procédé de formation d'une séquence d'images de sortie à partir d'une séquence d'images d'entrée selon un premier mode de réalisation de l'invention ;
- la figure **2** illustre de façon schématique les étapes du procédé de formation d'une séquence d'images de sortie selon un exemple de réalisation de l'invention, comprenant des sous-séquences de N images, avec N choisi égal à 4 ;
- la figure **3** illustre de façon schématique un premier exemple de décomposition spatiale d'une image de la séquence d'entrée en 4 sous-images;
- la figure **4** illustre de façon schématique un deuxième exemple de décomposition spatiale d'une image de la séquence d'entrée en 4 sous-images;
- la figure **5** décrit de façon détaillée une étape de détermination d'une fréquence d'image pour une sous-séquence selon un deuxième mode de réalisation de l'invention ;
- la figure **6** décrit de façon schématique les étapes d'un procédé de reconstruction d'une séquence d'images d'entrée à partir d'une séquence de sortie selon un premier mode de réalisation de l'invention ;
- la figure **7** illustre de façon schématique les étapes du procédé de reconstruction d'une séquence d'images d'entrée selon un exemple de réalisation de l'invention, avec un ratio N choisi égal à 4 ;
- la figure **8** illustre de façon schématique les étapes d'un deuxième procédé de reconstruction d'une séquence d'images selon un exemple qui ne fait pas partie de l'invention revendiquée;
- la figure **9** illustre de façon schématique un exemple de structure de groupe d'images utilisée dans un schéma de codage standardisé ;
- la figure **10** illustre de façon schématique les étapes de formation d'une séquence d'images de sortie selon un troisième mode de réalisation de l'invention, lorsque la séquence est destinée à être restituée à un utilisateur porteur d'un visiocasque ;
- les figures **11A** et **11B** illustrent de façon schématique des exemples de cas d'usage de l'invention ;
- les figures **12A** et **12B** présentent de façon schématique des exemples de structure matérielle d'un dispositif de formation d'une séquence de sortie selon l'invention, lorsqu'il est intégré dans un équipement serveur ;
- les figures **13A** et **13B** présentent de façon schématique des exemples de structure matérielle d'un dispositif de reconstruction d'une séquence d'entrée selon selon un mode de réalisation de l'invention, lorsqu'il est intégré dans un équipement client ;
- les figures **14A** et **14B** présentent de façon schématique des exemples de structure matérielle d'un dispositif de reconstruction partielle d'une séquence d'entrée selon un mode de réalisation de l'invention, lorsqu'il est intégré dans un équipement client ;
- la figure **15** décrit de façon détaillée une alternative de l'étape de détermination d'une fréquence d'image pour une sous-séquence.

### 7. Description d'un mode de réalisation particulier de l'invention

L'invention propose de former une séquence d'images de sortie de résolution spatiale réduite à partir d'une séquence d'images d'entrée de résolution spatiale élevée. Le principe général de l'invention repose sur le découpage de la séquence d'images d'entrée en sous-séquences et l'association à une sous-séquence d'une fréquence d'images adaptée à son contenu. Chaque sous-séquence subit un sous-échantillonnage temporel dont le taux décroît avec la fréquence d'images associée, puis un sous-échantillonnage spatial qui croit avec la fréquence d'images, de sorte qu'un produit des taux de sous-échantillonnage appliqués ait une valeur constante égale à un entier N supérieur ou égal à 2. On désigne ici par taux de sous-échantillonnage de N un taux d'échantillonnage de 1/N.

Lorsque la résolution spatiale de la séquence obtenue est supérieure à une fraction 1/N de la résolution spatiale d'entrée, les images de la sous-séquence sont décomposées spatialement de sorte à obtenir une sous-séquence de sortie de résolution spatiale égale à une fraction 1/N de la résolution spatiale d'entrée et de résolution temporelle égale à la résolution temporelle d'entrée.

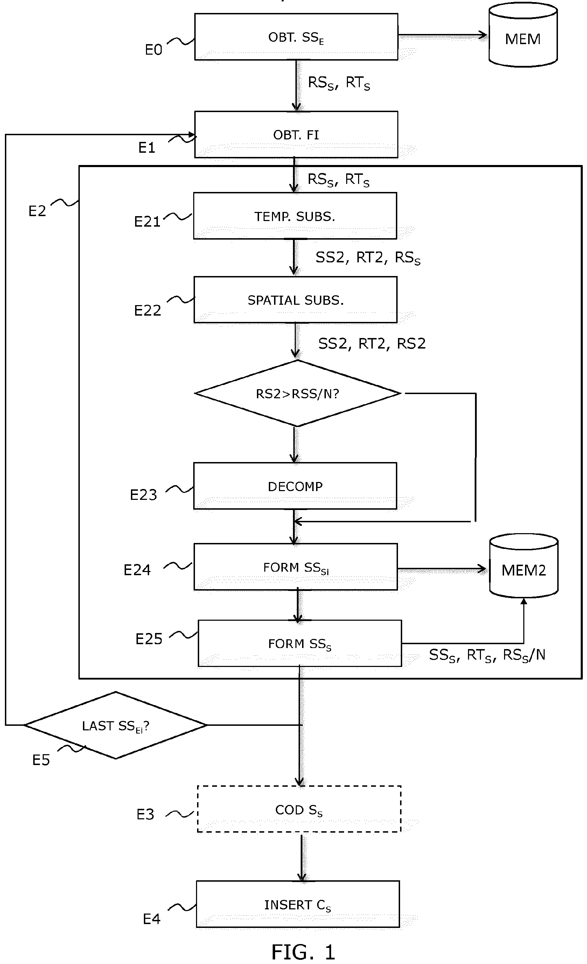

En relation avec la Figure **1****,** on décrit les étapes d'un procédé de formation d'une séquence d'images de sortie à partir d'une séquence d'images d'entrée selon un mode de réalisation de l'invention.

Dans la suite de la description, on considère une séquence d'images d'entrée à la résolution spatiale UHD et à la résolution temporelle de 120 images par seconde ou fps (pour « frame per second », en anglais) ou Hz (pour Hertz) et on souhaite former une séquence d'images de sortie de résolution spatiale 4 fois inférieure (format HD) et de résolution temporelle inchangée.

La séquence d'images d'entrée est préalablement découpée en sous-séquences d'entrée SSE au cours d'une étape préalable E0 d'analyse de la séquence, qui sera décrite ultérieurement. Les sous-séquences comprennent un nombre d'images prédéterminé égal à un entier N non nul supérieur ou égal à 2.

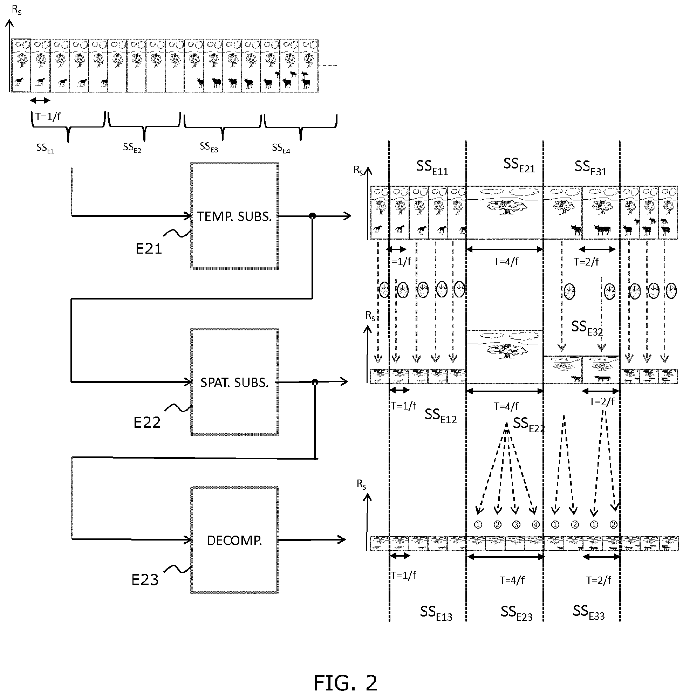

L'application du procédé selon l'invention à la séquence d'images d'entrée est illustrée par la Figure **2****.**

Le procédé comprend la succession d'étapes suivantes :
Au cours d'une première étape E1, on obtient une sous-séquence SS_{Ei}, dite sous-séquence courante et une fréquence d'images FI associée à cette sous-séquence. Cette fréquence d'images a été estimée au cours de l'étape préalable E0. Avantageusement, elle représente la fréquence d'images minimale permettant le rendu de la sous-séquence d'images sans perte perceptible de qualité pour un utilisateur final.

En E2, on réalise un prétraitement de la sous-séquence courante SS_{Ei}, destiné à former une sous-séquence de sortie SS_{Si} ayant une résolution temporelle de sortie RTₛ égale à la résolution temporelle d'entrée RT_{E} et une résolution spatiale de sortie RS_{S} égale à une fraction prédéterminée 1/N de la résolution spatiale d'entrée RS_{E} par le nombre entier N. Dans l'exemple considéré, N vaut 4. Cette étape comprend les sous-étapes suivantes :
- Sous-échantillonnage temporel E21 de la sous-séquence courante avec un taux d'échantillonnage temporel compris entre 1 et la fraction 1/N prédéterminée, décroissant avec la fréquence d'images obtenue, et formation d'une sous-séquence SSEi1 ayant une deuxième résolution temporelle RT₂. Par exemple, on suppose qu'on a trois valeurs possibles de fréquences d'images FI, par exemple égales à 120, 60 et 30 fps, correspondant respectivement à une classe de mouvement élevé, moyen, faible. Pour une classe de mouvement faible, le taux de sous-échantillonnage sera de ¼, comme pour la sous-séquence SSE2 de la Figure **2****,** pour une classe de mouvement moyen, de ½, comme illustré par la sous-séquence SSE3 de la Figure 2, et pour une classe de mouvement élevé de 1 (c'est-à-dire pas de sous-échantillonnage). C'est le cas de la sous-séquence SSE1 de la Figure **2****.**

Une telle décimation supprime les images inutiles selon la fréquence d'images associée à la sous-séquence :
∘ Pour FI = 120 fps : pas de suppression d'images
∘ Pour FI = 60 fps : suppression d'une image sur deux
∘ Pour FI = 30 fps : suppression de trois images sur quatre
   - Sous-échantillonnage spatial E2₂ de la deuxième sous-séquence SSi₁ formée avec un taux d'échantillonnage spatial compris entre 1 et la fraction 1/N prédéterminée, décroissant avec la fréquence d'images, de sorte qu'un produit des taux d'échantillonnage temporel et spatial soit égal à la fraction prédéterminée 1/N et formation d'une troisième sous-séquence SSi₃ ayant une troisième résolution spatiale RS₃. Si on considère l'exemple de la première sous-séquence SSE1 illustrée par la Figure 2, la sous-séquence SSE11 est sous-échantillonnée avec un taux de 4 et la sous-séquence SSE12 obtenue a une résolution spatiale égale à la résolution spatiale de sortie RSS. La sous-séquence SSE31 est sous-échantillonnée avec un taux de 2 et la sous-séquence SSE32 obtenue a une résolution spatiale égale à 2 fois la résolution spatiale de sortie. La sous-séquence SS21 est sous-échantillonnée avec un taux de 1 (c'est-à-dire n'est pas sous-échantillonnée spatialement) et la sous-séquence SSE22 obtenue a une résolution spatiale égale à 4 fois la résolution spatiale de sortie RSS. En résumé, la résolution des images de la sous-séquence courante est réduite selon sa fréquence d'images FI associée:
      - Si FI = 120 fps : réduction de la résolution par quatre (de UHD à HD)
      - Si FI = 60 fps : réduction de la fréquence spatiale par deux (de UHD à ½ UHD)
      - Si FI =30 fps : pas de réduction de la fréquence spatiale (on reste en UHD)

Avantageusement, dans le cas de FI = 60 fps, on choisit une direction horizontale ou verticale de sous-échantillonnage spatial en fonction du contenu des images de la sous-séquence. Pour ce faire, on exploite des mesures déjà calculées pour déterminer la fréquence d'images de la sous-séquence d'entrée, comme par exemple des gradients et leur direction principale. On obtient donc deux possibilités à 60 fps :
∘ FI = 60 fps + direction horizontale : réduction de la fréquence spatiale par deux *en horizontal* (de UHD à ½ UHD H = 1920 pixels x 2160 lignes)
∘ FI = 60 fps + direction verticale : réduction de la fréquence spatiale par deux *en vertical* (de UHD à ½ UHD V = 3840 pixels x 1080 lignes)

A ce stade, la quantité d'information contenue dans la sous-séquence de sortie SSS a déjà été réduite d'un un rapport 4 par rapport à la sous-séquence d'entrée SSE, puisque la conjonction du sous-échantillonnage spatial et de la décimation temporelle donne un rapport N = 4 quelle que soit la fréquence d'images associée à la sous-séquence d'entrée. Il en résulte que l'invention permet le stockage de la vidéo après traitement dans un fichier quatre fois plus petit que celui de la vidéo source. L'invention permet donc de faciliter le stockage intermédiaire ou l'archivage de contenu vidéo.

Toutefois, si dans un souci de réduire encore le débit nécessaire à la transmission de la vidéo, il est envisagé de recourir à un codée standard, le format proposé n'est pas adapté car la plupart des codées existants fonctionnent avec des vidéos d'entrée dont les résolutions spatiale et temporelles sont fixes. Or ce n'est pas le cas des sous-séquences issues des deux étapes de sous-échantillonnage précédentes.

C'est donc ici qu'intervient l'étape supplémentaire suivante :
- Lorsque la troisième résolution spatiale RS₃ est supérieure à la résolution spatiale de sortie RSs, décomposition spatiale E2₃ des images de la troisième sous-séquence en au moins deux sous-images et au plus N sous-images de résolution spatiale égale à la résolution spatiale de sortie (RSs). Pour la sous-séquence SSE12, la résolution spatiale est déjà égale à RSS, donc on ne fait rien. Pour la sous-séquence SS22, la résolution spatiale est égale à la résolution spatiale de SSE2, donc on décompose ses images en N=4 sous-images. Pour la sous-séquence SSE22, la résolution spatiale est égale à 2 fois la résolution spatiale de sortie, donc on décompose ses images en N =2 sous-images.

On obtient ainsi :
- Si FI = 120 fps et RS3 = RSS = résolution HD : pas de décomposition
- Si FI = 60 fps et RS3 = ½ UHD H : décomposition verticale en deux images HD
- Si FI = 60 fps et RS3 = ½ UHD V : décomposition horizontale en deux images HD
- Si FI = 30 fps et RS3 = UHD : décomposition en quatre images HD

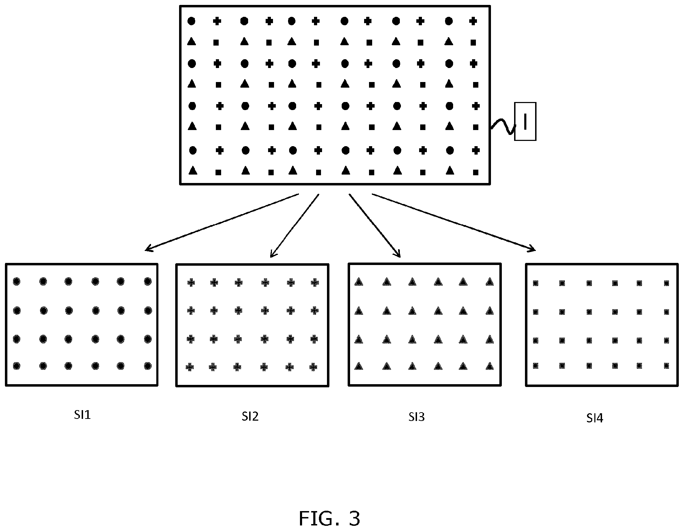

Une telle décomposition spatiale peut se faire de plusieurs manières pourvu qu'elle contribue à transformer une redondance spatiale en redondance temporelle. En effet, les codeurs standardisés tirent classiquement parti de cette redondance temporelle pour comprimer l'information contenue dans une séquence d'images. Il s'agit donc de permettre à un codée standard de fonctionner sur la séquence d'images qu'il reçoit en entrée. Dans la suite, on propose deux méthodes différentes mais l'invention n'est pas limitée à ces exemples et toute autre méthode pourrait être utilisée.
∘ La première méthode est la décomposition polyphase (appelée parfois « lazy wavelet »), connue de l'homme du métier, qui revient à effectuer un sous-échantillonnage d'une image d'entrée avec une phase différente pour chaque sous-image. Son principe est illustré par la Figure **3****.**

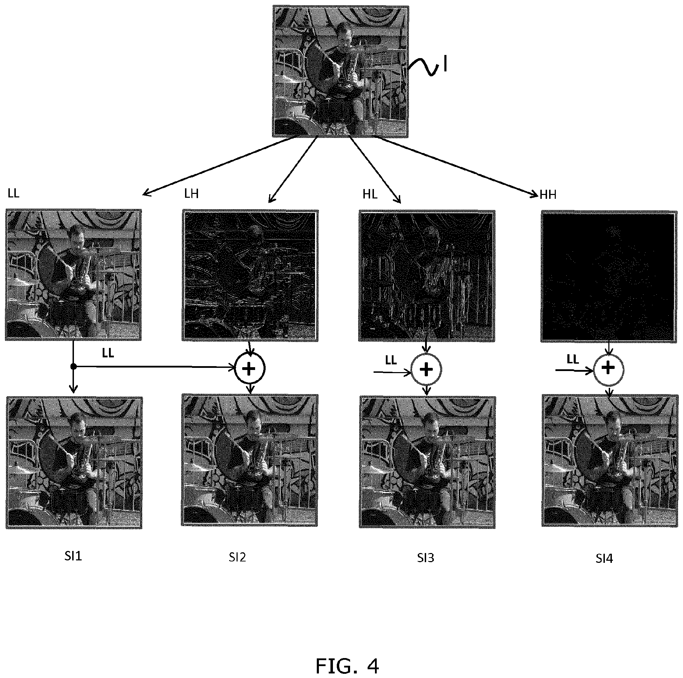

Dans le cas où N=4, on comprend aisément que les quatre sous-images obtenues présenteront une corrélation élevée puisque elles sont issues de la même image source. Le principal avantage de cette méthode est sa très grande simplicité. Son désavantage est qu'elle ne respecte pas le théorème de Shannon est qu'elle introduit donc un repliement de spectre en présence de fréquences spatiales élevées dans la source.
∘ La deuxième méthode, illustrée par la Figure **4****,** repose sur une décomposition en ondelettes de l'image source. Parmi les ondelettes utilisées habituellement dans le domaine de la vidéo, il est préférable de choisir celles dont l'implémentation reste simple. Ainsi celles de Haar, par exemple décrites sur le lien suivant :
   https://en.wikipedia.org/wiki/Haar_wavelet, ou encore celles de Le Gall 5/3 , par exemple décrites dans le document de D. Le Gall et al., intitulé "Sub-band Coding of Digital Images using Symmetric Short Kernel Filters and Arithmetic Coding Techniques," publié par IEEE dans les proceedings Acoustics, Speech, and Signal Processing, en 1988 (ICASSP, International Conférence on IEEE, en 1988, pp. 761-764), semblent bien adaptées. Les ondelettes de Haar et Le Gall se prêtent bien à la décomposition recherchée mais d'autres ondelettes pourraient sans doute être utilisées.

Quel que soit le type d'ondelette utilisé, dans le cas où N= 4, la décomposition produit 4 sous-bandes : LL, LH, HL et HH. La sous-bande LL correspond aux basses fréquences de l'image alors que LH, HL et HH correspondent respectivement aux hautes fréquences horizontales, verticales et diagonales. Afin de pouvoir former la sous-séquence de sortie aux résolutions spatiale et temporelle souhaitées, les trois images hautes fréquences obtenues en LH, HL et HH sont re-transformées en images large bande en leur ajoutant simplement l'image LL.

On note que, pour une valeur de N supérieure à 4, comme par exemple N = 8 ou 16, on peut réaliser la décomposition spatiale à l'aide d'une décomposition en paquet d'ondelettes (pour « Wavelet Packet Décomposition», en anglais), connue de l'homme de métier et par exemple décrite sur le lien suivant : https://en.wikipedia.org/wiki/Wavelet_packet_decomposition.
- En E2₄, on forme la sous-séquence d'images de sortie SSSi par insertion temporelle des N=4 sous-images issues de la décomposition à des instants successifs entre l'image décomposée et l'image suivante.
- En E2₅, on forme la séquence d'image de sortie par insertion temporelle de la sous-séquence SSi formée.

On teste en E5 s'il reste des sous-séquences à traiter. Si oui, les étapes E1 et E2 sont répétées pour la sous-séquence suivante. On notera que les sous-séquences peuvent être obtenues à l'aide d'une fenêtre glissante. De la sorte deux sous-séquences consécutives de la séquence d'image d'entrée ont une ou plusieurs images en commun, ce qui permet de passer plus rapidement à une fréquence d'images plus élevée et donc d'améliorer la réactivité du système.

On obtient une séquence de sortie de résolution spatiale RS_{S} = RS_{E}/N et de résolution temporelle RTS =RTE. Dans le cas où N=4 et la séquence de sortie est au format HD à 120 fps.

Au cours d'une étape optionnelle E3, la séquence SS_{S} obtenue est transmise à un codeur. Il s'agit préférentiellement d'un codeur standardisé, par exemple conforme à la norme AVC (pour « Advanced Video Coding », en anglais) ou HEVC (pour « High Efficiency Video Coding », en anglais) ou à leurs extensions futures (VVC, etc.). Un flux de données codées est obtenu.

De manière à faciliter l'opération de post-traitement après décodage, il est nécessaire de signaler pour chaque image la fréquence d'images FI de la sous-séquence SSᵢ à laquelle elle appartient et sa position temporelle dans cette sous-séquence.

Par exemple, l'information de position temporelle est un index pointant le numéro d'image dans la sous-séquence SS_{Si}. Pour N= 4 et FI=30 fps, l'index prend une valeur entière entre 0 et 3. Pour FI = 60 fps, l'index sera 0 ou 1. Il suffit donc de 2 bits pour signaler la fréquence d'images et de 0 à 2 bits pour coder l'index de l'image :
- 120 fps = 0 codé sur 2 bits
- 60 fps H = 1 + n° index de l'image sur 1 bit ;
- 60 fps V = 2 + n° index de l'image sur 1 bit ;
- 30 fps = 3 + n° index de l'image sur 2 bits.

Cette information pourra par exemple être transportée explicitement par un flux de données privées tel que supporté dans la plupart des codées, comme par exemple, les messages de type SEI (pour « Supplemental Enhancement Information », en anglais) dans les standards MPEG AVC et HEVC.

De façon alternative, cette information est obtenue à partir de métadonnées déjà présentes dans le flux de données codées. On parle de signalisation implicite. Par exemple, la fréquence d'images FI peut être déduite à partir d'informations temporelles de type PTS (pour « Présentation Time Stamp », en anglais) associées à chaque image de la séquence. En effet, l'écart entre deux PTS successifs correspond à la durée d'affichage de l'image, qui est égale à l'inverse de la fréquence d'images. De la même manière, le numéro d'index peut être remis à 0 à chaque changement de fréquence.

Selon un principe similaire, on pourrait aussi utiliser les informations de code temporel (pour « Time Code », en anglais) qui, par exemple, sont véhiculées dans les messages SEI de HEVC. Lorsque le Time Code reste identique sur 4 images successives, c'est que la sous-séquence a une fréquence d'images correspondant à la résolution temporelle la plus basse, tandis que s'il change à chaque image, sa fréquence d'images a la valeur maximale. Quant à l'index, il est remis à zéro lorsque le time code se remet à évoluer suite à un gel.

En E4, on insère les données codées représentatives de la séquence de sortie SSS dans un conteneur de sortie Cs.

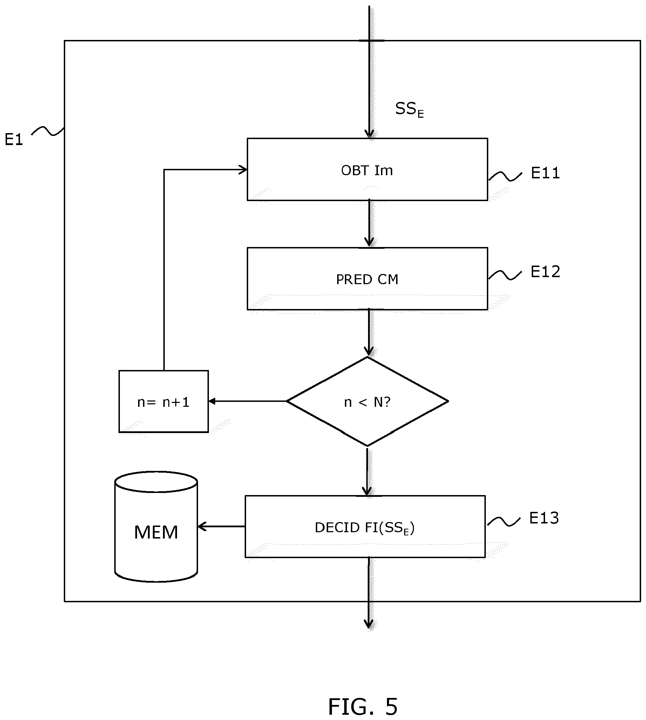

En relation avec la Figure **5****,** on décrit maintenant l'étape préalable E0 d'analyse de la séquence d'images d'entrée. Dans un premier temps, une analyse du contenu spatial et temporel est effectuée pour décider de la fréquence d'images minimale à laquelle une sous-séquence d'images de la séquence d'entrée peut être représentée sans perte de qualité perçue. Cette étape d'analyse peut s'appuyer sur des techniques de traitement d'images de types variés, connues de l'homme de métier. Avantageusement, elle s'appuie sur une technique de classification mettant en oeuvre un système de prédiction supervisé, de type apprentissage automatique (pour « Machine Learning », en anglais) mais elle pourrait également utiliser d'autres technique d'intelligence artificielle telles que des réseaux de neurones par exemple.

Le système de prédiction automatique s'appuie sur un modèle préalablement appris, pour prédire la fréquence d'images d'une sous-séquence d'entrée SSEi. Il s'agit donc d'une technique de classification. Dans l'exemple précédent, la sous-séquence d'entrée a une résolution temporelle RT_{E} égale à 120 fps avec une réduction adaptative de la résolution temporelle dans un facteur 4 (N=4), le système affecte à chaque sous-séquence une classe de fréquence d'images parmi trois classes prédéterminées : la Classe 30Hz, la Classe60Hz et la Classe120Hz.

De façon classique, on procède en deux phases successives :
- **une phase d'apprentissage** : réalisée au préalable sur une bibliothèque de séquences vidéo de référence. A partir de cet apprentissage un modèle est calculé.

Dans cette phase il est nécessaire d'avoir constitué une bibliothèque (base de données) de séquences vidéo à la résolution temporelle de 120Hz. Cette base de donnée doit être suffisamment grande (plusieurs milliers d'échantillons de quelques secondes) et contenir tous les types de vidéo représentatifs (forts mouvements, faibles mouvements, ...) de ce qu'on peut rencontrer dans le domaine de la télévision, du jeu, de la réalité virtuelle, etc.. Cette base de données doit être "labellisée" (ou étiquetée), c'est-à-dire que chaque échantillon ou sous-séquence d'entrée doit être classée (3 labels possibles : Classe30Hz, Classe60Hz ou Classe120Hz). La labellisation peut être réalisée de manière subjective (par test visuel subjectif) ou à l'aide d'une métrique objective.

Avantageusement, cette étape comprend en outre, pour chaque sous-séquence d'entrée, l'extraction d'une pluralité de caractéristiques spatio-temporelles. Par exemple, on calcule une carte de vecteurs de mouvements par image de la sous-séquence. Cette carte comprend l'amplitude et la direction des vecteurs de mouvement de chaque pixel ou bloc de l'image par rapport à l'image précédente. A cette analyse du mouvement, d'autres critères peuvent avantageusement être combinés de manière à extraire des caractéristiques spatiales du contenu de l'image. Par exemple, on peut extraire des gradients horizontaux et verticaux, appliquer des filtres directionnels, extraire des informations relative à une dynamique du signal (valeur moyenne, médiane, écart-type, percentiles, etc.). A partir de l'ensemble de ces éléments spatio-temporels on constitue un vecteur de caractéristiques de l'image.

Les vecteurs de caractéristiques des N images de la sous-séquence courante sont ensuite combinés pour former un unique vecteur pour la sous-séquence. Par exemple, la ième caractéristique du vecteur de sous-séquence est obtenue par sommation, moyenne ou calcul d'une médiane des N valeurs de cette caractéristique pour les N images.

Bien sûr l'invention n'est pas limitée à ce type d'analyse d'image et peut s'appuyer sur toute autre technique connue de l'homme de métier de nature à renseigner sur le contenu statique et dynamique d'une image de la sous-séquence courante. D'une part, ces vecteurs doivent être assez complexes pour représenter efficacement les propriétés spatio-temporelles de l'image et permettre à l'algorithme de trouver une bonne corrélation entre ces vecteurs et les classes de fréquences d'image. D'autre part l'extraction de ces vecteurs de caractéristiques doit être réalisable en temps réel, il est donc nécessaire de faire des compromis sur la complexité et sur la taille de ces vecteurs. Les inventeurs ont constaté qu'après élimination des caractéristiques redondantes ou trop corrélées entre elles, un nombre raisonnable de caractéristiques des vecteurs est compris entre 7 et 15. Par exemple, un vecteur à 12 composantes réalise de bonnes performances de prédiction. Cette réduction de la taille des vecteurs de caractéristique est importante pour garantir une meilleure généralisation de l'algorithme de Machine Learning et éviter les phénomènes d'apprentissage par coeur (pour "overfitting" , en anglais).

Pour chaque sous-séquence de la base d'apprentissage, le vecteur obtenu est associé au label qui étiquète la sous-séquence d'entrée afin de constituer une vérité terrain (ou "ground-truth").

Au cours de l'apprentissage, l'algorithme de « Machine Learning » mis en oeuvre par le système de prédiction automatique cherche à corréler la classe (label) de fréquence image aux vecteurs de caractéristiques extraits. De nombreux algorithmes de Machine Learning, connus de l'homme de métier, peuvent être utilisés comme par exemple les « Random Forest » ou le « Multi-layer-Perceptron ». Dans notre application les Random Forest donnent de très bons résultats avec des taux de prédiction de l'ordre de 90% de bonnes prédictions.

Une fois la phase d'apprentissage réalisée, l'algorithme de Machine Learning produit un modèle de prédiction qui va par la suite être exporté et utilisé pour la prédiction de la classe de fréquence d'images à partir des vecteurs de caractéristiques.
- **une phase de prédiction en temps-réel** : Elle réutilise le modèle appris et calculé préalablement pour classifier les sous-séquences qui sont présentées en entrée du système de prédiction automatique.

Pour chaque sous-séquence de la vidéo entrante, un vecteur de caractéristiques (les mêmes que dans la phase d'apprentissage) est extrait en temps réel à partir de caractéristiques spatio-temporelles. Le modèle de Machine Learning calculé dans la phase d'apprentissage, est utilisé pour prédire en temps-réel (à chaque sous-séquence) la classe de fréquence image qui doit être appliquée (Classe30Hz, Classe60Hz ou Classe120Hz).

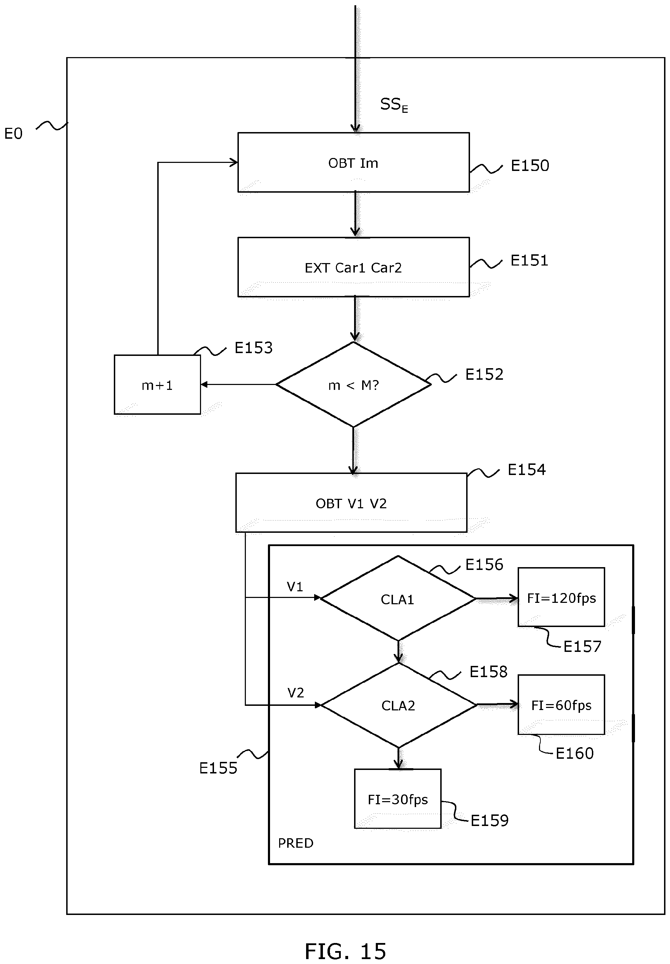

La **figure 15** illustre une alternative de l'étape préalable E0 d'analyse de la séquence d'images d'entrée. Un but de cette alternative est de déterminer la fréquence d'images la plus basse pour une sous séquence donnée, sans que l'on puisse percevoir une dégradation de la qualité par rapport à la séquence vidéo d'entrée UHD. Dans cet exemple, trois classes de mouvement sont considérées, respectivement associées aux fréquences d'images 120fps (UHD), 60fps et 30fps. Bien entendu, le nombre de classes, ainsi que les fréquences d'images sont données ici à titre d'exemple et ne sont nullement limitatifs.

Pour une sous-séquence d'entrée SS_{E} donnée, on obtient une image Im, étape E150, à partir de laquelle on extrait, étape E151, un premier ensemble de caractéristiques Cari et un deuxième ensemble de caractéristiques spatio-temporelles Car2. Chaque ensemble forme un vecteur de caractéristiques propre à l'image. Ces caractéristiques, décrites ci-avant, peuvent être spécifiques à chaque ensemble ou à l'inverse identiques pour les deux ensembles ou encore identiques pour seulement une partie d'entre eux. Ces caractéristiques sont de préférences choisies de façon à réduire la complexité des étapes de classifications décrites ci-après.

Une fois les ensembles de caractéristiques extraits, on teste, étape E152, si l'image traitée Im est la dernière image M à traiter, M étant un entier. M peut correspondre au nombre d'images total de la sous-séquence d'entrée SS_{E} ou alors au nombre d'une partie prédéterminée des images de cette sous-séquence d'entrée SS_{E}, si toutes ses images ne sont pas à traiter. Par exemple, M peut être le nombre d'images de type Inter de la sous-séquence d'entrée SS_{E}, si l'on extrait les ensembles de caractéristiques sur des images de type Inter seulement. Si l'image considérée n'est pas la dernière, on incrémente le rang de l'image à traiter (m+1), étape E153, et on réitère les étapes E150 à E152 jusqu'à la dernière des images à traiter.

On obtient, étape E154, un premier de vecteur de caractéristiques V1 à partir des premiers ensembles de caractéristiques ou seulement d'une partie de ces premiers ensembles de caractéristiques (par exemple si certains premiers ensembles de caractéristiques correspondent à des images dupliquées au sein de la même sous-séquence). De même un deuxième vecteur de caractéristiques V2 à partir des deuxièmes ensembles de caractéristiques ou seulement d'une partie de ces deuxièmes ensembles de caractéristiques. L'obtention des vecteurs de caractéristiques pour la sous-séquence d'entrée SS_{E} a été décrite ci-avant, en référence à la figure 5.

Une étape de prédiction de la fréquence d'images E155 est alors réalisée à partir du premier vecteur V1 de caractéristiques et éventuellement du deuxième vecteur V2 de caractéristiques.

Une première étape E156 met en oeuvre une première méthode de classification. Cette méthode de classification est de préférence une méthode de classification par forêt d'arbres décisionnels ou « Random Forest classifier » en langue anglaise. Cette méthode est par exemple décrite dans « *Random Forests »* par Leo Breiman dans Machine Learning, 45, 5-32, 2011, Kluwer Academic Publishers*.* La première méthode est apte à décider si la fréquence d'images FI associée à la sous-séquence d'entrée SS_{E} doit être maintenue à la valeur la plus élevée, ici 120fps (UHD) ou si elle peut être diminuée, cette décision étant basée sur les valeurs du premier vecteur de caractéristiques V1.

Si la première méthode de classification, ici binaire, décide de classer la sous-séquence d'entrée SS_{E} considérée dans la classe image Classe120Hz correspondant à la fréquence d'images 120fps, on obtient alors une fréquence d'images FI de 120fps. Si à l'inverse, la première méthode de classification décide que la fréquence d'images peut être diminuée sans impact visuel, une deuxième méthode de classification sélectionne, lors d'une deuxième étape E158, une autre classe associée à une fréquence plus faible (ici 60fps ou 30fps). Cette sélection est effectuée à partir du deuxième vecteur de caractéristiques V2. En fonction des valeurs du deuxième vecteur de caractéristiques V2, la deuxième méthode de classification, ici binaire, sélectionne la plus faible valeur de fréquence sans impact sur la qualité visuelle. Si la fréquence d'images la plus faible peut être sélectionnée, la classe image Classe30Hz correspondant à la fréquence d'images 30fps est alors sélectionnée. On obtient alors la fréquence d'images FI de 30fps correspondante, étape E159. Sinon, la classe image Classe60Hz correspondant à la fréquence d'images intermédiaire 60fps est sélectionnée. On obtient donc la fréquence d'images FI de 60fps correspondante, étape E160.

En variante, le deuxième ensemble de caractéristiques et le deuxième vecteur de caractéristiques correspondant peuvent être respectivement extraits et obtenu uniquement si la première méthode de classification décide que la fréquence d'images peut être diminuée. Ainsi, des ensembles de caractéristiques successifs peuvent être extraits, et des vecteurs de caractéristiques obtenus, tant que la classe de mouvement associée à la fréquence d'images minimale possible n'est pas obtenue.

En variante, l'une ou les méthodes de classification sont des méthodes dites multiclasses, c'est-à-dire permettant de sélectionner une classe parmi P classes, P étant un entier supérieur à 2.

Ladite étape préalable E0 comprend alors les étapes suivantes (non représentées à des fins de simplification) :
- Extraction d'au moins une partie des images de ladite sous-séquence, d'un premier ensemble de caractéristiques ;
- Formation pour ladite sous-séquence, d'un premier vecteur de caractéristiques à partir d'au moins une partie du premier ensemble de caractéristiques des images du groupe d'images ;
- Prédiction d'une classe de mouvement de la sous-séquence considérée à l'aide d'au moins une méthode de classification, une première méthode de classification étant apte à partir du premier vecteur de caractéristiques à sélectionner une première classe de mouvement ou non pour ladite sous-séquence, et si ladite première classe de mouvement n'est pas sélectionnée, ladite étape préalable comprend en outre les étapes suivantes :
   - Extraction pour chaque image d'un groupe d'images de ladite sous-séquence, d'au moins un deuxième ensemble de caractéristiques ;
   - Formation pour ladite sous-séquence, d'un deuxième vecteur de caractéristiques à partir d'au moins une partie du deuxième ensemble de caractéristiques des images du groupe d'images ;
   - Prédiction d'une classe de mouvement de la sous-séquence considérée à l'aide d'une deuxième méthode de classification, la deuxième méthode étant apte à partir du deuxième vecteur de caractéristiques à sélectionner une deuxième classe de mouvement ou une troisième classe de mouvement pour ladite sous-séquence,
- Obtention de la fréquence d'image associée à la classe de mouvement sélectionnée.

Dans le cas général où K méthodes de classification sont utilisées (K étant un entier), l'étape préalable E0 comprend les sous-étapes suivantes, qui se déduisent immédiatement de ce qui précède :
- Extraction pour chaque image d'au moins une partie des images de ladite sous-séquence, de K ensembles de caractéristiques ;
- Formation pour ladite sous-séquence, de K vecteurs de caractéristiques, le k^{ième} vecteur de caractéristiques étant formé à partir d'au moins une partie du k^{ième} ensemble de caractéristiques extraits pour les images considérées, k étant un entier compris entre 1 et K;
- Prédiction d'une classe de mouvement de la sous-séquence considérée à l'aide de K méthodes de classification, les K-1^{ième} premières méthodes étant aptes à partir du vecteur de caractéristiques de rang correspondant, à sélectionner une classe de mouvement prédéterminée ou non pour ladite sous-séquence, la K^{ième} méthode étant apte, si aucune classe de mouvement n'a été sélectionnée par les méthodes précédentes, à sélectionner une K^{ième} ou une K+1^{ième} classe de mouvement à partir du K^{ième} vecteur de caractéristiques ;
- Obtention de la fréquence d'image associée à la classe de mouvement sélectionnée.

Les méthodes de classification ont préalablement été entraînées à l'aide de bases de données choisies. De préférence, des bases de données d'entrainement spécifiques ont été préparées pour chaque méthode de classification.

Une première base de données pour entraîner la première méthode de classification est obtenue à partir de séquences vidéo à 120fps, un premier ensemble de séquences étant étiquetées à 120fps et un deuxième ensemble de séquences étant étiquetées à 30fps d'une part et à 60fps d'autre part.

L'étiquetage des séquences consiste, à l'aide d'un test subjectif expert, de leur associer la fréquence minimale qui ne produit pas de dégradations visuelles.

De préférence, les deux ensembles de séquences ont la même taille, de façon à ne pas favoriser une classe pendant l'entraînement. En effet, les probabilités d'avoir l'une ou l'autre des classes dans un contenu multimédia classique sont à priori égales.

Une deuxième base de données pour entraîner la deuxième méthode de classification est obtenue à partir de séquences vidéo à 120fps, un premier ensemble de séquences étant étiquetées à 60fps et un deuxième ensemble de séquences étant étiquetées à 30fps, ces deux ensembles ayant de préférence la même taille.

La première et la deuxième base de données sont constituées de caractéristiques représentatives de différentes métriques pertinentes pour la méthode de classification associée, permettant la meilleure discrimination entre les deux choix possibles. Par exemple, comme déjà expliqué ci-avant, l'une des métriques utilisée peut être une information de mouvement (par exemple les vecteurs de mouvement). La valeur de la luminance des pixels et des gradients directionnels obtenus sur les images de la base de données, peuvent être des métriques particulièrement intéressantes pour détecter le clignotement qui apparait lors du visionnage d'une vidéo à une fréquence trop faible.

Les métriques utilisées peuvent être identiques pour les deux bases de données ou complètement ou partiellement différentes.

Les caractéristiques choisies pour former la première base de données sont celles qui sont extraites pour former le premier ensemble de caractéristiques Cari (étape E151). De même, les caractéristiques choisies pour former la deuxième base de données sont celles qui sont extraites pour former le deuxième ensemble de caractéristiques Car2.

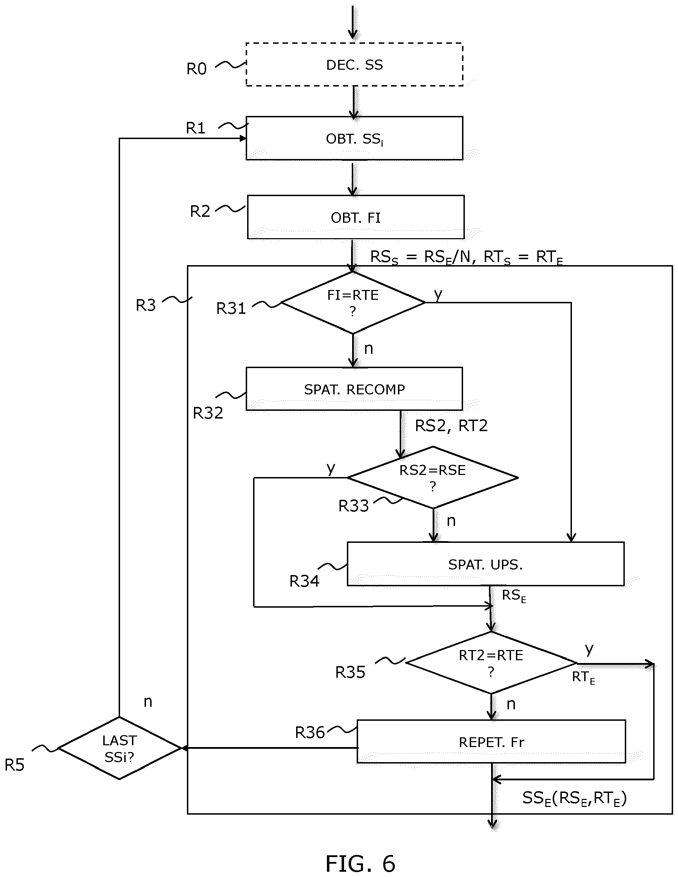

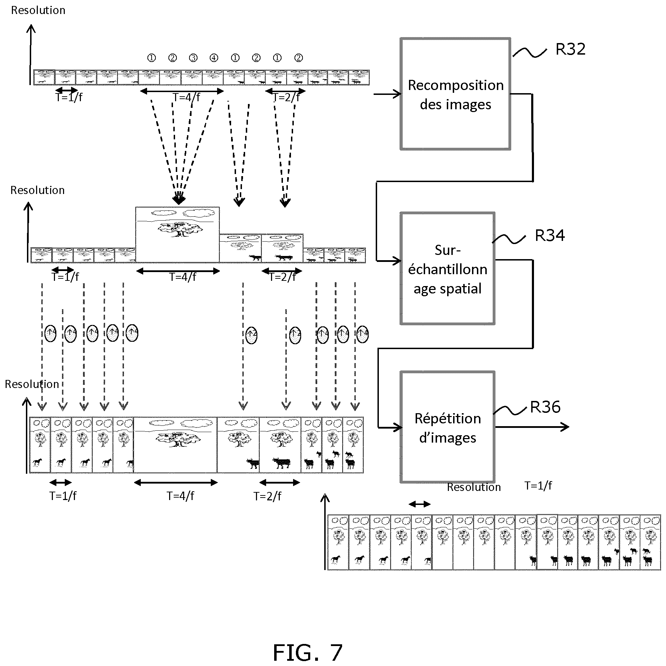

On suppose maintenant que le conteneur de sortie Cs est reçu par un équipement client. Il met en oeuvre un procédé de reconstruction d'une séquence d'images à partir de ce conteneur de sortie, selon un premier mode de réalisation de l'invention, qui va maintenant être décrit en relation avec la Figure **6****.** Un exemple de reconstruction d'une séquence d'images UHD est illustré par la Figure **7****.**

Le flux de données représentatives de la séquence d'images d'entrée peut être compressé. Dans ce cas, au cours d'une étape optionnelle R0, il est décodé par un décodeur standard, dual de l'encodeur utilisé par l'équipement serveur. On obtient une séquence d'images décodée SS_{S}.

Au cours d'une étape R1, on en extrait une sous-séquence SSi à traiter. En R2, on obtient une fréquence d'images FI associée à cette sous-séquence. Elle peut être obtenue à partir d'une information supplémentaire signalée explicitement dans un en-tête du conteneur CS, comme par exemple le champ SEI évoqué précédemment, ou bien déduite de métadonnées classiquement présentes dans le conteneur. Il s'agit alors de signalisation implicite. On obtient en outre une information supplémentaire relative à une direction, horizontale ou verticale de recomposition spatiale ainsi qu'un numéro d'index pour chaque image de la sous-séquence.

La reconstruction de la séquence d'images d'entrée SE comprend ensuite un post-traitement R3, illustré par la Figure **7****,** comprenant les étapes duales de celles du prétraitement :
En R31, on teste si la fréquence d'images FI associée à la sous-séquence SSi courante est égale à la résolution temporelle RTS de la séquence d'images SS reçue. Si c'est le cas, on passe à l'étape R3 de sur-échantillonnage spatial.

Sinon, on réalise en R32 une recomposition des images de la sous-séquence SSi de façon duale du prétraitement, de sorte à obtenir une résolution temporelle RT2 égale à la fréquence d'images FI. Dans l'exemple décrit précédemment pour le prétraitement la résolution temporelle de la séquence de sortie est 120 fps. Si la fréquence d'images FI associée à la sous-séquence courante SSS vaut 60 fps, alors on va recomposer une image à partir de deux images successives de la sous-séquence. Si la fréquence d'images FI associée à la sous-séquence courante SSi vaut 30 fps, alors on va recomposer une image à partir de 4 images successives de la sous-séquence.

Si une décomposition polyphase a été appliquée, la recomposition consiste simplement en un ré-entrelacement des pixels de 2 ou 4 images successives selon leur phase initiale. Si une décomposition en ondelettes a été effectuée sur 4 images, la première image LL est soustraite aux 3 suivantes, afin de retrouver les images LH, HL et HH. Dans le cas d'une décomposition en ondelettes sur deux images en horizontal (ou vertical), la première image LL est soustraite à la suivante, afin de retrouver l'image LH respectivement HL.

On obtient donc une sous-séquence courante de résolution spatiale RS2 supérieure à la résolution RSS de la sous-séquence obtenue et de résolution temporelle inférieure à la résolution temporelle RTS de la sous-séquence obtenue.

A l'issue de cette étape, on teste en R33 si la résolution spatiale RS2 de la sous-séquence courante est égale à la résolution spatiale souhaitée RSE pour la séquence d'images reconstruite. Si c'est le cas, on passe directement à l'étape de répétition d'images R36.

Sinon, la résolution spatiale RS2 est inférieure à la résolution spatiale RSE souhaitée, donc on réalise en R34 une étape de sur-échantillonnage spatial des images de la sous-séquence courante afin d'atteindre la résolution maximale RSE.

Dans l'exemple considéré précédemment, la résolution spatiale la plus élevée est UHD. Pour une sous-séquence courante ayant des images à la résolution spatiale RS2=1/2 UHD, cela correspond respectivement à un sur-échantillonnage par 2. Pour une résolution spatiale RS2 = HD, cela revient à faire un sur-échantillonnage par 4.A la suite de cette opération, les images de la sous-séquence courante sont toutes à la résolution spatiale maximale RSE.

Au cours d'une étape R35, on teste si la résolution temporelle RT2 de la sous-séquence courante est égale à la résolution temporelle RTE souhaitée pour la sous-séquence reconstruite. Si c'est bien le cas, le post-traitement est terminé pour la sous-séquence courante. Sinon, on réalise une étape R36 de répétition d'images afin d'augmenter la résolution temporelle de la sous-séquence. Par exemple, pour une résolution temporelle de 60 fps, on fait une copie de chaque image et on insère la copie entre cette image et la suivante de la sous-séquence. Pour une résolution temporelle égale à 30 fps, on insère trois fois la copie à la suite de l'image courante de sorte à obtenir une sous-séquence de résolution temporelle RTE = 120 fps.

A l'issue de cette dernière opération on retrouve donc une sous-séquence courante au format de la séquence d'origine, c'est-à-dire à la résolution maximale (UHD) et fréquence image maximale (120fps).

En R37, on l'insère dans un conteneur à la suite de la sous-séquence reconstruite précédemment.

En R38, on teste s'il reste des sous-séquences à traiter. Si oui, on obtient la suivante et on répète les étapes qui viennent d'être décrites. Sinon, le processus est terminé.

Dans l'exemple particulier qui vient d'être décrit en relation avec la Figure **2** pour la formation d'une séquence de sortie et la Figure **7** pour la reconstruction de la séquence d'entrée, la séquence d'entrée est au format UHD avec 120 fps et la résolution spatiale est réduite d'un facteur N = 4. Bien sûr l'invention n'est pas limitée à cet exemple et s'applique tout aussi bien à d'autres formats d'images et d'autres valeurs de N. Par exemple on considère le format de séquence d'images 8K, qui correspond à une résolution spatiale 7680x4320 pixels et une résolution temporelle de 240fps et on choisit un facteur N égal à 16. On considère donc des sous-séquences comprenant N=8 images. Dans cet exemple, quatre niveaux de fréquences d'images FI pourraient être envisagés, ce qui impliquerait alors la possibilité de prévoir 5 classes distinctes de sous-séquences lors de l'étape de classification automatique. Les niveaux de résolution spatiale et temporelle seraient les suivants :
- 8K à 15 fps
- ½ 8K (Horizontal ou Vertical) à 30 fps ;
- 4K à 60 fps ;
- ½ 4K (Horizontal ou Vertical) à 120 fps ; et
- HD à 240 fps.

A partir de ces 5 fréquences d'images, on obtiendrait donc 7 modes distincts de prétraitement d'une sous-séquence d'entrée et un index d'images allant de 0 à 15.

En variante, pour prétraiter une séquence d'entrée au format UHD à 100 fps, on pourrait garder une taille de sous-séquence de N=4 images, mais les classes de résolutions spatio-temporelles deviendraient :
- 4k à 25 fps ;
- ½ 4K à 50 fps ; et
- HD à 100 fps.

Un avantage de l'invention qui vient d'être décrite est qu'elle produit une séquence d'images de sortie qui est non seulement moins coûteuse à stocker et à transmettre, mais aussi nativement échelonnable. Cette dernière propriété est notamment procurée par la décomposition spatiale des images de résolution spatiale supérieure à RSE/N en N sous-images, puis la formation d'images de résolution spatiale RSE/N à partir de ces sous-images et leur insertion dans la séquence de sortie SSS, réalisée par l'invention. En effet, elle offre la possibilité à un équipement client récepteur de la séquence de sortie, d'obtenir directement une séquence d'images aux résolutions spatiale et temporelles minimales RES/N et RTE/N (HD 30 fps dans l'exemple précédent), à partir du flux de données reçues.

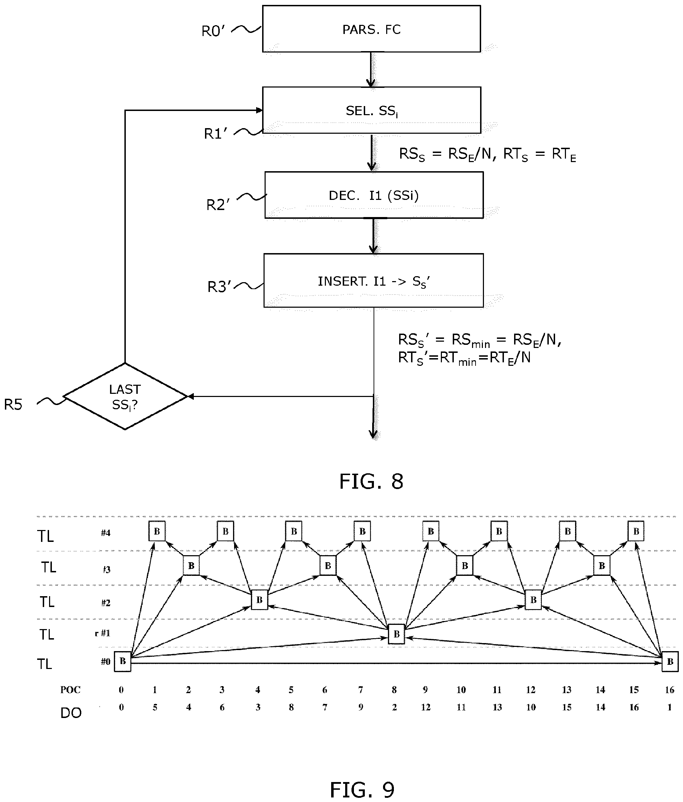

Pour ce faire, selon un exemple non revendiqué, un équipement client met en oeuvre un deuxième procédé de reconstruction d'une séquence d'images à partir du flux de données reçu, la séquence d'images reconstruite comprenant une résolution spatiale minimale et une résolution temporelle minimale. Les étapes de ce deuxième procédé de reconstruction vont maintenant être décrites en relation avec la Figure **8****.**

On suppose ici que le flux de données reçu par l'équipement client comprend des données codées. Par exemple, l'équipement client dispose d'une puissance de calcul limitée.

Lors d'une étape R0', il analyse le flux de données codées, et en particulier les informations de signalisation contenues dans ses en-têtes, pour extraire au moins une taille N des sous-séquences. En R1', il sélectionne une sous-séquence à traiter SSi et il détermine en R2' une position de sa première image I1. On utilisera par exemple la position des images Intra pour déterminer le début d'une sous-séquence, qui comprend N images. Elle est ensuite décodée par un décodeur classique en R3'. Les N-1 autres images de la sous-séquence ne sont donc pas décodées ce qui diminue significativement la charge de l'équipement client.

En R4' cette première image I1 est insérée dans une séquence d'image de sortie SS' avec un numéro d'images correspondant au numéro de la sous-séquence courante SSi et une fréquence d'images correspondant à la résolution temporelle minimale RT_{E}/N.

En R5' on teste s'il reste des sous-séquences à traiter. Si c'est le cas on répète l'enchaînement d'étapes R0' à R4'.

On comprend que, contrairement au premier procédé de reconstruction selon l'invention, cet exemple ne réalise pas le post-traitement dual de celui réalisé par le procédé de formation d'une séquence de sortie selon l'invention, mais qu'il produit une séquence SS' de résolution spatiale et temporelle minimales à partir de cette séquence de sortie.

Cet aspect particulier peut avantageusement être exploité par un équipement client contraint en énergie ou en puissance comme un téléphone mobile ou encore pour fournir un mode de traitement dégradé en cas de liaison de mauvaise qualité présentant un taux d'erreur élevé. Cependant, la possibilité de ne décoder qu'une image sur N nécessite que la structure du groupe d'images GoP utilisée par le codée soit adaptée et qu'en particulier les images décodées par le décodeur n'aient pas été exploitées par le codeur pour prédire les images à décoder. Cette condition est satisfaite, lorsque la première image de la sous-séquence est une image de type INTRA ou I, car ces images ne sont pas prédites. En revanche, le début d'une sous séquence ne coïncide pas forcément avec le début d'un GoP. En relation avec la Figure 9, une structure de GoP hiérarchique en couches peut être adaptée. En effet, elle concentre dans ses couches les plus basses les images qui peuvent être décodées indépendamment de celles appartenant aux couches les plus hautes. Par exemple, on peut faire en sorte que la première image de chaque sous-séquence appartienne aux couches TL 0, 1 ou 2.

L'invention qui vient d'être présentée ci-dessus trouve notamment son application dans un contexte de réalité virtuelle, augmentée ou mixte. Le visiocasque est connecté à un équipement serveur qui stocke la séquence d'entrée et forme une séquence de sortie à la volée en fonction des interactions de l'utilisateur avec son environnement virtuel. A chaque fois que l'utilisateur interagit avec la scène, celle-ci est modifiée et il faut transmettre une nouvelle séquence d'images au visiocasque pour qu'il puisse réaliser le rendu de la scène modifiée et l'afficher sur l'écran du visiocasque. On comprend que dans ce cas d'usage les capacités de transmission de la connexion sans fil entre le visiocasque et l'équipement serveur sont limitées. Avec l'invention la taille mémoire occupée par la séquence avant codage est diminuée d'un facteur N, avec N entier supérieur ou égal à 2. Elle permet donc de diminuer la latence de transmission et/ ou de permettre une utilisation multi-utilisateur de l'environnement virtuel ou encore de tirer parti de l'économie de bande passante pour mieux sécuriser la transmission du contenu.

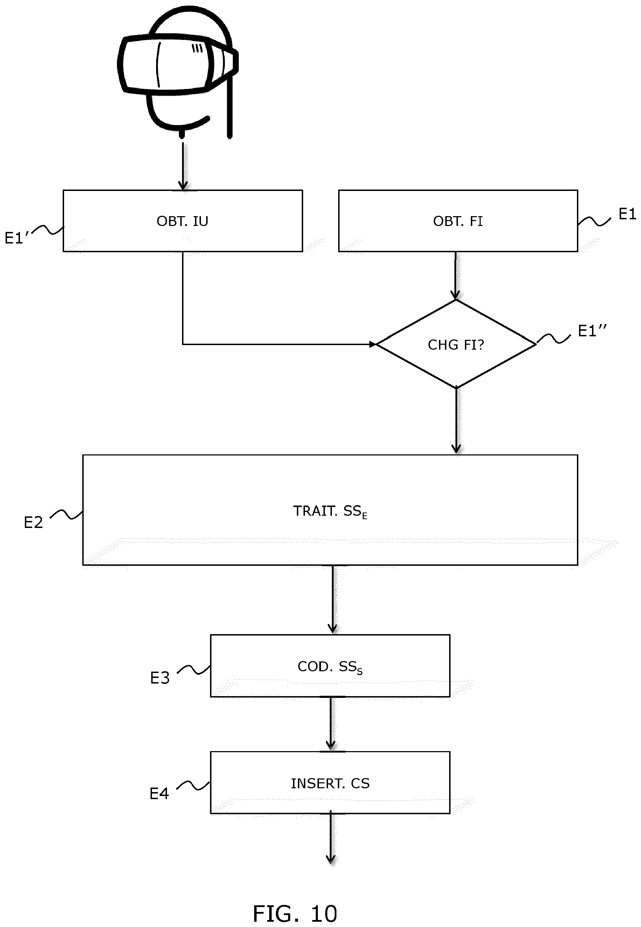

En relation avec la Figure **10****,** on présente maintenant un troisième mode de réalisation de l'invention destiné à ce cas d'usage. Cet aspect de l'invention permet d'améliorer la réactivité du rendu en prenant en compte les interactions de l'utilisateur avec la scène, comme un mouvement de tête ou le fait d'agir sur un objet. En effet, le fait d'augmenter la fréquence image contribue à la réduction de la latence entre l'instant de l'interaction et sa prise en compte dans l'affichage du casque.

Sur la Figure **10****,** les étapes E1 à E4 du procédé de formation d'une séquence de sortie sont inchangées, mais le procédé comprend une étape supplémentaire E1' d'obtention d'une information représentative d'une interaction de l'utilisateur avec la scène et une étape E1" de décision de changement de la fréquence d'images FI associée à la sous-séquence courante en E1.

En ce qui concerne l'obtention de l'information relative à une interaction de l'utilisateur avec la scène, plusieurs modes de réalisations peuvent être envisagés. Selon une première option, elle comprend une sous-étape d'obtention d'une information représentative d'un mouvement de tête de l'utilisateur. Par exemple, cette information comprend des mesures d'angles qui sont transmises au rythme des images affichées dans le visiocasque. Avantageusement il s'agit de trois mesures d'angles D'Euler, appelées communément « yaw, pitch, roll ». La décision de changement de fréquence d'images est prise sur la base de ces mesures, qui sont comparées à des seuils prédéterminés. Par exemple, si au moins une des mesures varie de plus de 3° entre deux images successives, alors la fréquence d'images est fixée à sa valeur maximale. Dans l'exemple décrit précédemment la valeur maximale est de 120 fps. Lorsque l'utilisateur bouge la tête, cela modifie la portion de scène qu'il perçoit dans son champ de vision. Le fait de sélectionner la fréquence d'images la plus élevée permet de rafraichir la vidéo le plus fréquemment possible selon les mouvements de l'utilisateur. Cette réactivité est souhaitable pour que l'utilisateur ne ressente pas cette différence entre ses mouvements et la scène affichée, ce qui peut conduire parfois à un inconfort pouvant le conduire jusqu'à la nausée.

Selon une deuxième option, l'information obtenue comprend en outre une information relative à une interaction de l'utilisateur avec un objet de la scène, qu'il déplace ou agrandit par exemple. Dans ce cas, on peut de la même manière décider de forcer la fréquence d'images à sa valeur maximale, car le champ de vision du casque change aussi avec les actions de l'utilisateur sur le contenu virtuel.

Bien sûr une combinaison des deux types d'informations peut être exploitée pour décider de la valeur de la fréquence d'images la plus adaptée.

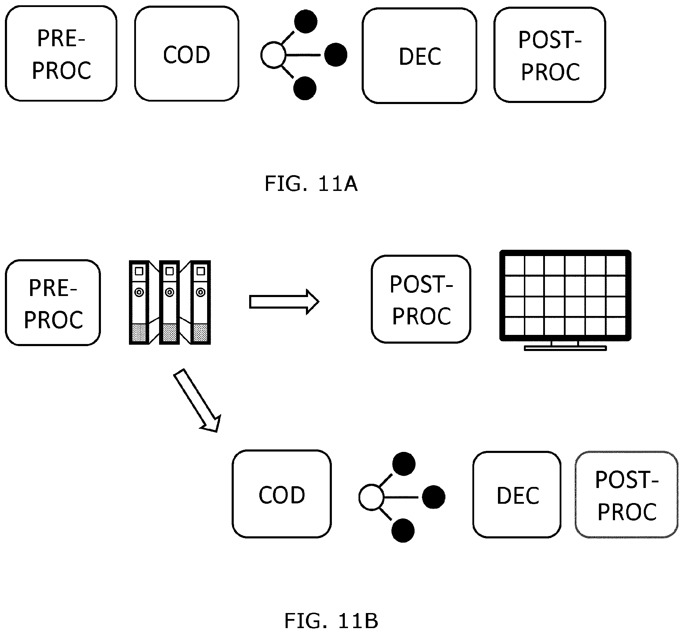

En relation avec la Figure **11A****,** on illustre un cas d'usage classique de l'invention, selon lequel la séquence formée est codée puis transmise via un réseau de télécommunications à un équipement client récepteur, qui la décode et la reconstruit.

En relation avec la Figure **11B****,** on présente un autre cas d'usage de l'invention qui vient d'être décrite, celui d'un système de vidéo à la demande ou VoD (pour « Video on Demand », en anglais). Le procédé de formation d'une séquence d'images de sortie à partir d'une séquence d'images d'entrée tel qu'il vient d'être décrit est alors exécuté par un équipement serveur connecté à un réseau de télécommunications. La séquence de sortie est stockée sous un format particulier à en-tête, de sorte à associer à chaque sous-séquence les taux de sous-échantillonnage temporel et spatial appliqués et rendre l'opération réversible. Elle n'est pas nécessairement compressée avant stockage.

Si elle n'est pas compressée, on utilise par exemple un format de type DPX (pour « Digital Picture Exchange », en anglais) ou TIFF (pour « Tagged Image File Format », en anglais) qui forme un fichier par image. Cette application de l'invention exploite l'avantage qu'elle procure en termes d'économie de ressources de stockage.

Dans le cas du DPX, chaque entête d'image contient un champ dédié à une information de fréquence et un champ dédié à la taille de l'image. On peut donc utiliser directement ces champs pour signaler le format utilisé pour la sous-séquence en cours. De la même façon, chaque image étant contenue dans un fichier indépendant, elle est numérotée et il est donc possible de déduire son index dans la sous-séquence en recherchant le numéro de l'image qui a subi le dernier changement de fréquence.

L'équipement serveur réalise un stockage intermédiaire de la séquence de sortie SS formée avant codage et transmission. Elle pourra ensuite être traitée par un module de post-production, puis être codée et enfin être transmise à un ou plusieurs équipements clients via un réseau de télécommunications.

Selon une alternative, un stockage intermédiaire de la séquence de sortie peut aussi être réalisé à l'issue de l'étape E22 de sous-échantillonnage temporel, avant l'étape de décomposition E23, de façon à faciliter la post production. La décomposition E23 est ensuite effectuée sur la séquence post-produite.

On notera que l'invention qui vient d'être décrite, peut être mise en oeuvre au moyen de composants logiciels et/ou matériels. Dans cette optique, les termes « module » et « entité », utilisés dans ce document, peuvent correspondre soit à un composant logiciel, soit à un composant matériel, soit encore à un ensemble de composants matériels et/ou logiciels, aptes à mettre en oeuvre la ou les fonctions décrites pour le module ou l'entité concerné(e).

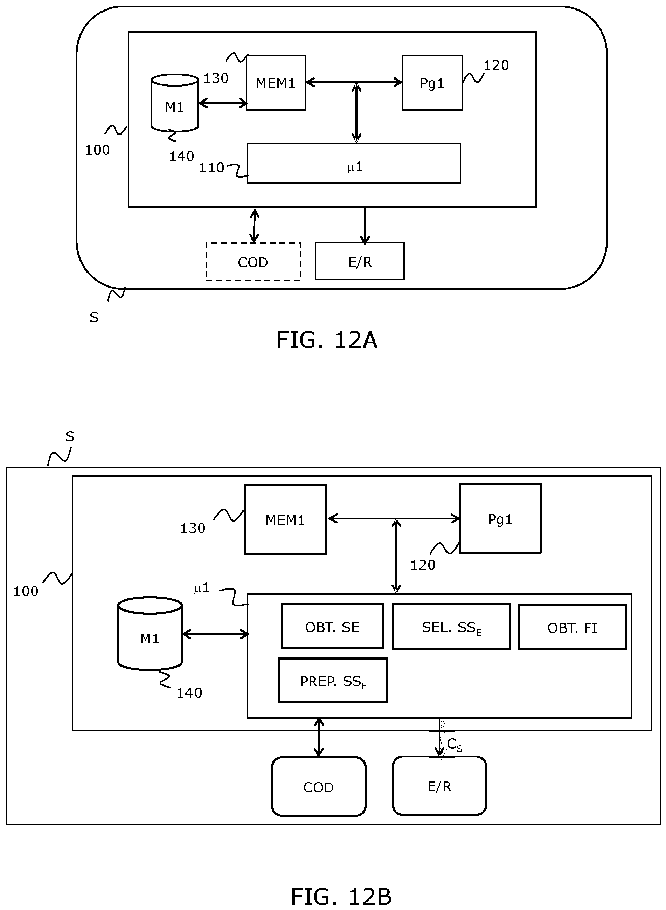

En relation avec les Figures **12A** et **12B****,** on présente maintenant la structure simplifiée d'un dispositif 100 de formation d'une séquence d'images de sortie, adapté pour mettre en oeuvre le procédé de formation selon l'un quelconque des modes particuliers de réalisation de l'invention qui viennent d'être décrit en relation avec les figures **1 à 5****.**

Le dispositif 100 est adapté pour former une séquence d'images de sortie SS et l'insérer dans un conteneur de sortie Cs.

Le dispositif de traitement 100 est notamment configuré pour:
- Obtenir une sous-séquence de la séquence d'entrée, dite sous séquence d'entrée courante SS_{E} et une fréquence temporelle, dite fréquence image FI, associée à ladite sous-séquence;
- Traiter la sous-séquence d'entrée courante, comprenant :
   ∘ Sous-échantillonnage temporel de la sous-séquence courante avec un taux de sous-échantillonnage temporel compris entre 1 et la fraction 1/N prédéterminée, décroissant avec la fréquence image, et obtention d'une deuxième sous-séquence ayant une deuxième résolution temporelle RT₂ ;
   ∘ Sous-échantillonnage spatial de la deuxième sous-séquence SS₂ avec un taux de sous échantillonnage temporel compris entre 1 et la fraction 1/N prédéterminée, croissant avec la fréquence image, de sorte qu'un produit des taux d'échantillonnage temporel et spatial soit égal à la fraction prédéterminée 1/N et obtention d'une troisième sous-séquence SS₃ ayant une troisième résolution spatiale RS₃;
   ∘ Lorsque la troisième résolution spatiale RS₃ est supérieure à la résolution spatiale de sortie RSs, décomposition spatiale E2₅ des images de la troisième sous-séquence SS₃ en au moins deux sous-images de résolution spatiale égale à la résolution spatiale de sortie RS_{S} et formation E2₆ de la sous-séquence d'images de sortie par insertion temporelle des sous-images issues de la décomposition entre l'image décomposée et l'image suivante;
- Insérer INS. SS_{E} la sous-séquence de sortie SS_{S} et la fréquence image FI associée dans un conteneur de sortie Cs.

Selon un mode particulier de réalisation de l'invention illustré par la Figure **12A****,** le dispositif de traitement 100 a l'architecture classique d'un ordinateur et comprend notamment, une unité de traitement 110, équipée d'un processeur µ₁, et pilotée par un programme d'ordinateur Pg₁ 120, stocké dans une mémoire 130 et mettant en oeuvre le procédé de selon l'invention.

A l'initialisation, les instructions de code du programme d'ordinateur Pg₁ 120 sont par exemple chargées dans une mémoire RAM MEM1 avant d'être exécutées par le processeur de l'unité de traitement 110. Le processeur de l'unité de traitement 110 met en oeuvre les étapes du procédé décrit précédemment, selon les instructions du programme d'ordinateur 120.

Selon un autre mode particulier de réalisation de l'invention illustré par la Figure **12B****,** le procédé de formation est mis en oeuvre par des modules fonctionnels. Pour cela, le dispositif de codage 100 comprend au moins les modules fonctionnels suivants :
- Un module OBT. SS_{E} d'obtention d'une sous-séquence de la séquence d'entrée, dite sous séquence d'entrée courante SS_{E} et une fréquence temporelle, dite fréquence image FI, associée à ladite sous-séquence;
- Un module PREP. SS_{E} de traitement la sous-séquence d'entrée courante, comprenant :
   ∘ Un sous-échantillonnage temporel de la sous-séquence courante avec un taux de sous-échantillonnage temporel compris entre 1 et la fraction 1/N prédéterminée, décroissant avec la fréquence image, et obtention d'une deuxième sous-séquence ayant une deuxième résolution temporelle RT₂ ;
   ∘ Un sous-échantillonnage spatial de la deuxième sous-séquence SS₂ avec un taux de sous échantillonnage temporel compris entre 1 et la fraction 1/N prédéterminée, croissant avec la fréquence image, de sorte qu'un produit des taux d'échantillonnage temporel et spatial soit égal à la fraction prédéterminée 1/N et obtention d'une troisième sous-séquence SS₃ ayant une troisième résolution spatiale RS₃;
   ∘ Lorsque la troisième résolution spatiale RS₃ est supérieure à la résolution spatiale de sortie RSs, une décomposition spatiale E2₅ des images de la troisième sous-séquence SS₃ en au moins deux sous-images de résolution spatiale égale à la résolution spatiale de sortie RS_{S} et formation E2₆ de la sous-séquence d'images de sortie par insertion temporelle des sous-images issues de la décomposition entre l'image décomposée et l'image suivante;
- Un module INS. SS_{E} d'insertion de la sous-séquence de sortie SS_{S} et de la fréquence image FI associée dans un conteneur de sortie Cs.

Le dispositif 100 comprend en outre une mémoire M1 apte à stocker la séquence de sortie formée.

Ces unités sont pilotées par le processeur µ1 de l'unité de traitement 110.

L'unité de traitement 110 coopère avec les différents modules fonctionnels décrits ci-dessus et les mémoires MEM1 et M1 afin de mettre en oeuvre les étapes du procédé de formation selon l'invention. Les différents modules fonctionnels décrits ci-dessus peuvent être sous forme matérielle et/ou logicielle. Sous une forme logicielle, un tel module fonctionnel peut comprendre un processeur, une mémoire et des instructions de code de programme pour mettre en oeuvre la fonction correspondante au module lorsque les instructions de code sont exécutées par le processeur. Sous une forme matérielle, un tel module fonctionnel peut mis en oeuvre par tout type de circuits d'encodage adaptés, tels que par exemple et de manière non limitative des microprocesseurs, des processeurs de traitement du signal (DSP pour Digital Signal Processor en anglais), des circuits intégrés spécifiques à des applications (ASICs pour « Application Specific Integrated Circuit » en anglais), des circuits FPGA (pour « Field Programmable Gate Arrays » en anglais), un câblage d'unités logiques.

De façon avantageuse, un tel dispositif 100 peut être intégré à un équipement S tel qu'un serveur ou encore un équipement terminal, tel que par exemple un ordinateur portable ou un téléphone intelligent (pour « smartphone », en anglais). Le dispositif 100 est alors agencé pour coopérer au moins avec le module suivant de l'équipement S:
- un module E/R d'émission/réception de données, par l'intermédiaire duquel les données de la séquence de sortie sont transmises via un réseau de télécommunications, par exemple un réseau filaire ou un réseau sans fil à un équipement récepteur.

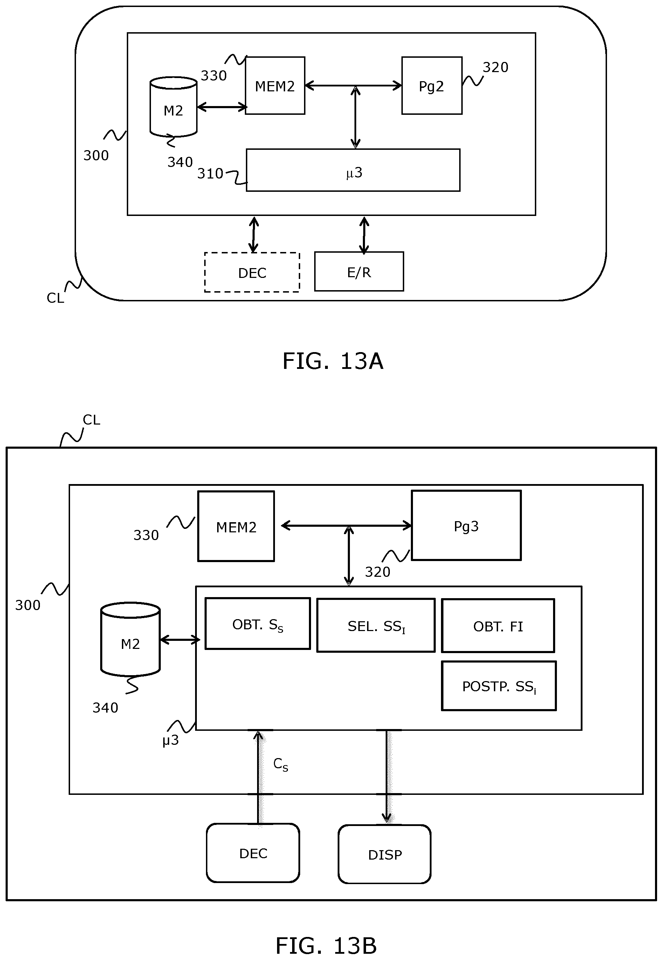

En relation avec les Figures **13A** et **13B****,** on présente maintenant la structure simplifiée d'un dispositif 200 de reconstruction d'une séquence d'images d'entrée, adapté pour mettre en oeuvre le procédé de reconstruction selon l'un quelconque des modes particuliers de réalisation de l'invention qui viennent d'être décrit en relation avec les figures **6** à **10****.**

Le dispositif 200 est adapté pour reconstruire une séquence d'images d'entrée à partir d'une séquence d'image de sortie insérée dans un conteneur de sortie.

Le dispositif de traitement 200 est notamment configuré pour:
- Obtenir à partir du conteneur de sortie d'une sous-séquence de la séquence de sortie et obtention d'une information représentative d'une fréquence image associée à ladite sous-séquence, dite sous-séquence courante ;
- Traiter la sous-séquence courante comprenant :
   ∘ Lorsque la sous-séquence courante a une fréquence image associée qui est inférieure à la résolution temporelle de sortie, recomposition spatiale d'au moins deux images successives de la sous-séquence en une image de deuxième résolution spatiale supérieure à la résolution spatiale d'entrée et inférieure ou égale à la résolution spatiale de sortie de sorte à former une deuxième sous-séquence courante d'images de deuxième résolution temporelle égale à la fréquence image ;
   ∘ Lorsque la deuxième résolution spatiale est inférieure à la résolution spatiale de sortie, réaliser un sur-échantillonnage spatial des images de la deuxième sous-séquence courante avec un taux de sur-échantillonnage spatial compris entre 1 et le nombre entier, qui croît avec la fréquence image, de sorte à obtenir une troisième sous-séquence courante de résolution spatiale égale à la résolution spatiale de sortie; et
   ∘ Lorsque la deuxième résolution temporelle de la troisième sous-séquence courante est inférieure à la résolution temporelle d'entrée (RT_{E}), reconstruire (R4₆) la sous-séquence courante d'entrée par recopie temporelle d'au moins une image de la troisième sous-séquence entre deux images successives de la sous-séquence de sorte à obtenir une sous-séquence (SS_{E}) ayant la résolution temporelle d'entrée (RT_{E}).

Selon un mode particulier de réalisation de l'invention illustré par la Figure **13A****,** le dispositif de reconstruction 200 a l'architecture classique d'un ordinateur et comprend notamment, une unité de traitement 210, équipée d'un processeur µ₂, et pilotée par un programme d'ordinateur Pg₂ 220, stocké dans une mémoire 230 et mettant en oeuvre le procédé de selon l'invention.

A l'initialisation, les instructions de code du programme d'ordinateur Pg₂ 220 sont par exemple chargées dans une mémoire RAM MEM2 avant d'être exécutées par le processeur de l'unité de traitement 210. Le processeur de l'unité de traitement 210 met en oeuvre les étapes du procédé décrit précédemment, selon les instructions du programme d'ordinateur 220.

Selon un autre mode particulier de réalisation de l'invention illustré par la Figure **13B****,** le procédé de reconstruction est mis en oeuvre par des modules fonctionnels. Pour cela, le dispositif de reconstruction 200 comprend au moins les modules fonctionnels suivants :
- Un module d'obtention OBT. SS_{S} à partir du conteneur de sortie CS d'une sous-séquence de la séquence de sortie et un module d'obtention OBT. FI d'une information représentative d'une fréquence image associée à ladite sous-séquence, dite sous-séquence courante ;
- un module de traitement POSTP. SS_{S} de la sous-séquence courante comprenant :
   ∘ Lorsque la sous-séquence courante a une fréquence image FI associée qui est inférieure à la résolution temporelle de sortie, recomposition spatiale R4₂ d'au moins deux images successives de la sous-séquence en une image de deuxième résolution spatiale RS₂ supérieure à la résolution spatiale d'entrée RSE et inférieure ou égale à la résolution spatiale de sortie RS_{S} de sorte à former une deuxième sous-séquence courante d'images de deuxième résolution temporelle RT₂ égale à la fréquence image FI;
   ∘ Un module de sur-échantillonnage spatial apte à, lorsque la deuxième résolution spatiale RS₂ est inférieure à la résolution spatiale de sortie RSs, sur-échantillonner des images de la deuxième sous-séquence courante avec un taux de sur-échantillonnage spatial compris entre 1 et le nombre entier N, qui croît avec la fréquence image, de sorte à obtenir une troisième sous-séquence courante SS₃ de résolution spatiale égale à la résolution spatiale de sortie RS_{S}; et
   ∘ Un module de reconstruction de la sous séquence courante d'entrée apte à, lorsque la deuxième résolution temporelle (RT₂) de la troisième sous-séquence courante est inférieure à la résolution temporelle d'entrée (RT_{E}), reconstruction (R4₆) de la sous-séquence courante d'entrée, faire une recopie temporelle d'au moins une image de la troisième sous-séquence entre deux images successives de la sous-séquence de sorte à obtenir une sous-séquence (SS_{E}) ayant la résolution temporelle d'entrée (RT_{E}).

Le dispositif 200 comprend en outre une mémoire M2 apte à stocker la séquence d'entrée reconstruite.

Ces unités sont pilotées par le processeur µ2 de l'unité de traitement 210.

L'unité de traitement 210 coopère avec les différents modules fonctionnels décrits ci-dessus et les mémoires MEM2 et M2 afin de mettre en oeuvre les étapes du procédé de reconstruction selon l'invention. Les différents modules fonctionnels décrits ci-dessus peuvent être sous forme matérielle et/ou logicielle. Sous une forme logicielle, un tel module fonctionnel peut comprendre un processeur, une mémoire et des instructions de code de programme pour mettre en oeuvre la fonction correspondante au module lorsque les instructions de code sont exécutées par le processeur. Sous une forme matérielle, un tel module fonctionnel peut mis en oeuvre par tout type de circuits d'encodage adaptés, tels que par exemple et de manière non limitative des microprocesseurs, des processeurs de traitement du signal (DSP pour Digital Signal Processor en anglais), des circuits intégrés spécifiques à des applications (ASICs pour « Application Specific Integrated Circuit » en anglais), des circuits FPGA (pour « Field Programmable Gate Arrays » en anglais), un câblage d'unités logiques.

De façon avantageuse, un tel dispositif 200 peut être intégré à un équipement récepteur tel qu'un équipement client CL ou encore un équipement terminal, tel que par exemple un ordinateur portable ou un téléphone intelligent (pour « smartphone », en anglais) ou encore un visiocasque HMD. Le dispositif 200 est alors agencé pour coopérer au moins avec le module suivant de l'équipement CL:
- un module E/R d'émission/réception de données, par l'intermédiaire duquel les données de la séquence de sortie sont transmises via un réseau de télécommunications, par exemple un réseau filaire ou un réseau sans fil à un équipement récepteur ;
- un module de détection des interactions de l'utilisateur.

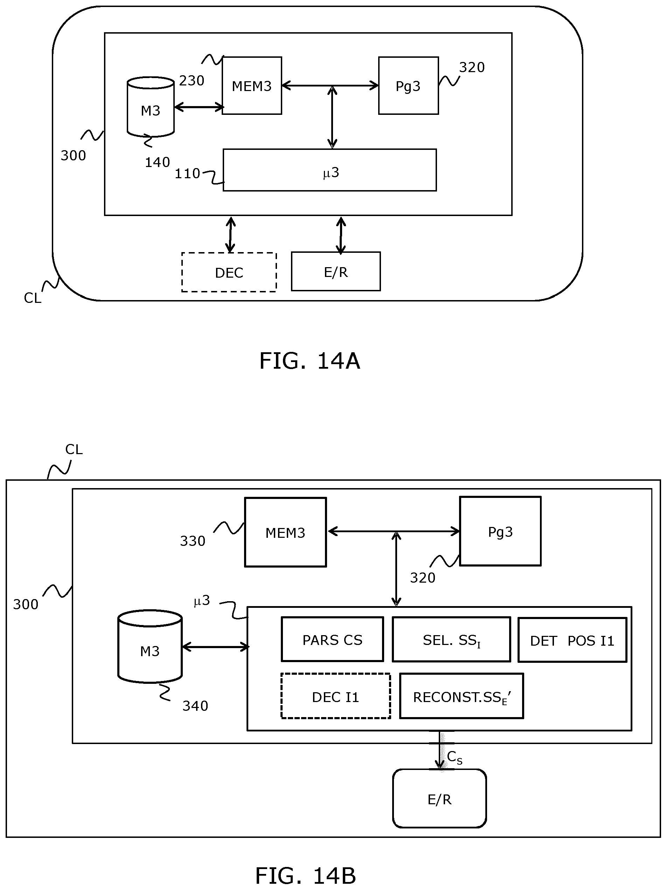

En relation avec les Figures **14A** et **14B****,** on présente maintenant la structure simplifiée d'un dispositif 300 de reconstruction partielle d'une séquence d'images d'entrée, adapté pour mettre en oeuvre le procédé de reconstruction selon l'un quelconque des exemples qui viennent d'être décrit en relation avec les figures **6** à **10****.**

Le dispositif 300 est adapté pour reconstruire une séquence d'images d'entrée à partir d'une séquence d'image de sortie insérée dans un conteneur de sortie.

Le dispositif de traitement 300 est notamment configuré pour:
- Obtenir (OBT SSi) à partir du conteneur de sortie (CS) d'une sous-séquence de la séquence de sortie, dite sous-séquence courante (SSᵢ);
- Traiter (EXT. I1) la sous-séquence courante comprenant une extraction d'une première image (I₁) de la sous-séquence ; et
- Former (FORM S_{E}') une séquence d'entrée partielle par insertion de la première image de la sous-séquence courante.
- Selon un exemple illustré par la Figure **14A****,** le dispositif de reconstruction partielle 300 a l'architecture classique d'un ordinateur et comprend notamment, une unité de traitement 310, équipée d'un processeur µ₃, et pilotée par un programme d'ordinateur Pg₂ 320, stocké dans une mémoire 330 et mettant en oeuvre le procédé de selon l'invention.
- A l'initialisation, les instructions de code du programme d'ordinateur Pg₃ 320 sont par exemple chargées dans une mémoire RAM MEM3 avant d'être exécutées par le processeur de l'unité de traitement 310. Le processeur de l'unité de traitement 310 met en oeuvre les étapes du procédé décrit précédemment, selon les instructions du programme d'ordinateur 320.
- Selon un autre exemple illustré par la Figure **14B****,** le procédé de reconstruction est mis en oeuvre par des modules fonctionnels. Pour cela, le dispositif de reconstruction 200 comprend au moins les modules fonctionnels suivants :
- Obtention à partir du conteneur de sortie (CS) d'une sous-séquence de la séquence de sortie, dite sous-séquence courante (SSᵢ);
- Traitement de (EXT. I1) la sous-séquence courante comprenant une extraction d'une première image (I₁) de la sous-séquence ; et
- Reconstruction (RECONST. S_{E}') une séquence d'entrée partielle par insertion de la première image de la sous-séquence courante.

Il va de soi que les modes de réalisation qui ont été décrits ci-dessus ont été donnés à titre purement indicatif et nullement limitatif, et que de nombreuses modifications peuvent être facilement apportées par l'homme de l'art sans pour autant sortir du cadre de l'invention.

## Revendications

1. Procédé de formation d'une séquence d'images, dite séquence de sortie (S_{S}), à partir d'une séquence d'images d'entrée (S_{E}), ladite séquence d'image d'entrée ayant une résolution spatiale d'entrée (RS_{E}) et une résolution temporelle d'entrée (RT_{E}), ladite séquence de sortie ayant une résolution temporelle de sortie (RT_{S}) égale à la résolution temporelle d'entrée (RT_{E}) et une résolution spatiale de sortie (RSₛ) égale à une fraction prédéterminée de la résolution spatiale d'entrée (RS_{E}) par un nombre entier supérieur ou égal à 2,
**caractérisé en ce que** le procédé comprend les étapes suivantes, mises en oeuvre pour une sous-séquence (SS_{E}) de la séquence d'entrée, dite sous-séquence courante et comprenant un nombre prédéterminé d'images (N):
- Obtention (E1) d'une fréquence d'images (FI), associée à ladite sous-séquence ;
- Traitement (E2) de la sous-séquence d'entrée courante, comprenant :
∘ Sous-échantillonnage temporel (E21) de la sous-séquence courante avec un taux de sous-échantillonnage temporel compris entre 1 et la fraction prédéterminée, décroissant avec la fréquence d'images obtenue, et formation d'une deuxième sous-séquence ayant une deuxième résolution temporelle (RT₂) ;
∘ Sous-échantillonnage spatial (E22) de la deuxième sous-séquence (SS₂) formée avec un taux de sous échantillonnage spatial compris entre 1 et la fraction prédéterminée, croissant avec la fréquence d'images, de sorte qu'un produit des taux d'échantillonnage temporel et spatial soit égal à la fraction prédéterminée et formation d'une troisième sous-séquence (SS₃) ayant une troisième résolution spatiale (RSₛ) ;
∘ Lorsque la troisième résolution spatiale (RSₛ) est supérieure à la résolution spatiale de sortie (RS_{S}), décomposition spatiale (E23) des images de la troisième sous-séquence (SS₃) en au moins deux sous-images et au plus N sous-images de résolution spatiale égale à la résolution spatiale de sortie (RSₛ) et formation (E2₆) de la sous-séquence d'images de sortie par insertion temporelle des sous-images issues de la décomposition entre l'image décomposée et l'image suivante ;
- Insertion (E4) de la sous-séquence de sortie SS_{S}) et de la fréquence d'images (FI) associée dans un conteneur de sortie (Cₛ).

2. Procédé de formation d'une séquence de sortie selon la revendication **1, caractérisé en ce qu'**il comprend en outre une étape de codage (E3) de la sous-séquence formée et de l'information de fréquence d'images (FI) associée et **en ce que** l'étape d'insertion (E4) insère les données codées dans le conteneur de sortie (Cₛ).

3. Procédé de formation d'une séquence de sortie selon l'une des revendications précédentes, **caractérisé en ce qu'**il comprend en outre une étape préalable (E0) de détermination de la fréquence d'images (FI) qui comprend les sous-étapes suivantes :
- Extraction d'un vecteur de caractéristiques par image et formation d'un vecteur de caractéristiques de la sous-séquence courante à partir des N vecteurs ;
- Prédiction d'une classe de mouvement de la sous-séquence courante à l'aide du vecteur formé et d'un système de prédiction automatique supervisé ;
- Détermination d'une fréquence d'image associée à la classe de mouvement prédite.

4. Procédé de formation d'une séquence de sortie selon l'une des revendications 1 ou 2, comprenant en outre une étape préalable de détermination de la fréquence d'images (FI) pour au moins ladite sous-séquence (SS_{E}) de la séquence d'entrée, ladite étape préalable comprenant les étapes suivantes :
- Extraction pour chaque image d'au moins une partie des images de ladite sous-séquence, d'au moins un premier et un deuxième ensemble de caractéristiques ;
- Formation pour ladite sous-séquence, d'un premier vecteur de caractéristiques à partir d'au moins une partie des premiers ensembles de caractéristiques extraits pour les images considérées et d'un deuxième vecteur de caractéristiques à partir d'au moins une partie des deuxièmes ensembles de caractéristiques extraits pour les images considérées ;
- Prédiction d'une classe de mouvement de la sous-séquence considérée à l'aide d'au moins une première et une deuxième méthode de classification, la première méthode étant apte à partir du premier vecteur de caractéristiques de sélectionner au moins une première classe de mouvement ou non pour ladite sous-séquence, la deuxième méthode étant apte, si ladite première classe de mouvement n'est pas sélectionnée, à sélectionner au moins une deuxième ou une troisième classe de mouvement ;
- Obtention de la fréquence d'images associée à la classe de mouvement sélectionnée.

5. Procédé de formation selon l'une des revendications précédentes, **caractérisé en ce qu'**il comprend en outre une étape (E1') d'obtention d'une information représentative d'une interaction d'un utilisateur (IU) avec la sous-séquence formée et une étape de décision de modification de la fréquence d'images obtenue en fonction de ladite information obtenue.

6. Procédé de formation selon l'une des revendications précédentes, **caractérisé en ce que** la fraction prédéterminée vaut ¼ et **en ce que** les étapes de sous-échantillonnage spatial et temporel comprennent trois valeurs de taux de sous-échantillonnage distinctes.

7. Procédé de reconstruction d'une séquence d'images, dite séquence d'entrée (S_{E}), ayant une résolution spatiale d'entrée (RS_{E}) et une résolution temporelle d'entrée (RT_{E}), à partir d'un conteneur de sortie (Cₛ), comprenant une séquence de sortie (S_{S}) ayant une résolution spatiale de sortie (RSₛ) égale à 1/N fois la résolution spatiale d'entrée (RS_{E}) avec N un nombre entier (N) supérieur ou égal à 2 et une résolution temporelle de sortie (RT_{S}) égale à la résolution temporelle d'entrée (RT_{E}),
**caractérisé en ce que**, ladite séquence étant découpée temporellement en une pluralité de sous-séquences, ledit procédé comprend les étapes suivantes mises en oeuvre pour une sous-séquence (SSᵢ) de la séquence de sortie, dite sous-séquence courante et comprenant un nombre prédéterminé d'images :
- Obtention (R1) à partir du conteneur de sortie (CS) de la sous-séquence (SSᵢ) de la séquence de sortie et obtention (R2) d'une information représentative d'une fréquence d'images (FI) associée à ladite sous-séquence courante ;
- Traitement (R3) de la sous-séquence courante comprenant :
∘ Lorsque la sous-séquence courante a une fréquence d'images (FI) associée qui est inférieure à la résolution temporelle de sortie, recomposition spatiale (R31) d'au moins deux images successives de la sous-séquence en une image de deuxième résolution spatiale (RS₂) supérieure à la résolution spatiale de sortie (RSₛ) et inférieure ou égale à la résolution spatiale d'entrée (RS_{E}) de sorte à former une deuxième sous-séquence courante d'images de deuxième résolution temporelle (RT₂) égale à la fréquence d'images (FI);
∘ Lorsque la deuxième résolution spatiale (RS₂) est inférieure à la résolution spatiale d'entrée (RSE), sur-échantillonnage spatial (R32) des images de la deuxième sous-séquence courante avec un taux de sur-échantillonnage spatial compris entre 1 et le nombre entier (N), qui croît avec la fréquence d'images de sorte à obtenir une troisième sous-séquence courante (SS₃) de résolution spatiale égale à la résolution spatiale d'entrée (RSE); et
∘ Lorsque la deuxième résolution temporelle (RT₂) de la troisième sous-séquence courante est inférieure à la résolution temporelle d'entrée (RT_{E}), reconstruction (R33) de la sous-séquence courante d'entrée par recopie temporelle d'au moins une image de la troisième sous-séquence entre deux images successives de la sous-séquence de sorte à obtenir une sous-séquence (SS_{E}) ayant la résolution temporelle d'entrée (RT_{E}).

8. Procédé de reconstruction d'une séquence d'images selon la revendication 7, **caractérisé en ce que**, le conteneur (C_{S}) comprenant des données codées, le procédé comprend une étape (R0, R2') de décodage de données codées de la séquence de sortie.

9. Dispositif (100) de formation d'une séquence d'images, dite séquence de sortie (S_{S}), à partir d'une séquence d'images d'entrée (S_{E}), ladite séquence d'image d'entrée ayant une résolution spatiale d'entrée (RS_{E}) et une résolution temporelle d'entrée (RT_{E}),ladite sous-séquence de sortie ayant une résolution temporelle de sortie (RT_{S}) égale à la résolution temporelle d'entrée (RT_{E}) et une résolution spatiale de sortie (RSₛ) égale à une fraction prédéterminée de la résolution spatiale d'entrée (RS_{E}) par un nombre entier supérieur ou égal à 2,
**caractérisé en ce que**, pour une sous-séquence (SS_{E}) de la séquence d'entrée, dite sous-séquence courante et comprenant un nombre prédéterminé d'images (N), le dispositif est configuré pour :
- Obtenir (OBT. SS_{E}) une sous-séquence de la séquence d'entrée, dite sous séquence d'entrée courante (SS_{E}) et une fréquence d'images (FI), associée à ladite sous-séquence ;
- Traiter (PREP. SS_{E}) la sous-séquence d'entrée courante, comprenant :
∘ Sous-échantillonnage temporel (E21) de la sous-séquence courante avec un taux de sous-échantillonnage temporel compris entre 1 et la fraction prédéterminée, décroissant avec la fréquence d'images, et obtention d'une deuxième sous-séquence ayant une deuxième résolution temporelle (RT₂) ;
∘ Sous-échantillonnage spatial (E22) de la deuxième sous-séquence (SS₂) avec un taux de sous échantillonnage temporel compris entre 1 et la fraction prédéterminée, croissant avec la fréquence d'images, de sorte qu'un produit des taux d'échantillonnage temporel et spatial soit égal à la fraction prédéterminée et obtention d'une troisième sous-séquence (SS₃) ayant une troisième résolution spatiale (RS₃);
∘ Lorsque la troisième résolution spatiale (RSₛ) est supérieure à la résolution spatiale de sortie (RS_{S}), décomposition spatiale (E2₅) des images de la troisième sous-séquence (SS₃) en au moins deux sous-images de résolution spatiale égale à la résolution spatiale de sortie (RSₛ) et formation (E2₆) de la sous-séquence d'images de sortie par insertion temporelle des sous-images issues de la décomposition entre l'image décomposée et l'image suivante;
- Insérer (INS. SS_{E}) la sous-séquence de sortie (SS_{S}) et la fréquence d'images (FI) associée dans un conteneur de sortie (Cₛ).

10. Dispositif (200) de reconstruction d'une séquence d'images, dite séquence d'entrée, ayant une résolution spatiale d'entrée (RS_{E}) et une résolution temporelle d'entrée (RT_{E}), à partir d'un conteneur de sortie (CS), comprenant une séquence de sortie ayant une résolution spatiale de sortie (RSₛ) égale à 1/N fois la résolution spatiale d'entrée (RS_{E}) avec N un nombre entier (N) supérieur ou égal à 2 et une résolution temporelle de sortie (RSₛ) égale à la résolution temporelle d'entrée (RT_{E}),
**caractérisé en ce que**, ladite séquence étant découpée temporellement en une pluralité de sous-séquences, ledit dispositif étant configuré pour :
- Obtenir (OBT. SSₛ) à partir du conteneur de sortie (CS) une sous-séquence de la séquence de sortie et obtenir (OBT. FI) une information représentative d'une fréquence d'images (FI) associée à ladite sous-séquence, dite sous-séquence courante ;
- Traiter (POSTP. SSₛ) la sous-séquence courante comprenant :
∘ Lorsque la sous-séquence courante a une fréquence d'images (FI) associée qui est inférieure à la résolution temporelle de sortie, recomposition spatiale (R4₂) d'au moins deux images successives de la sous-séquence en une image de deuxième résolution spatiale (RS₂) supérieure à la résolution spatiale de sortie (RSₛ) et inférieure ou égale à la résolution spatiale d'entrée(RSE) de sorte à former une deuxième sous-séquence courante d'images de deuxième résolution temporelle (RT₂) égale à la fréquence d'images (FI);
∘ Lorsque la deuxième résolution spatiale (RS₂) est inférieure à la résolution spatiale d'entrée (RSE), sur-échantillonnage spatial (R4₄) des images de la deuxième sous-séquence courante avec un taux de sur-échantillonnage spatial compris entre 1 et le nombre entier (N), qui croît avec la fréquence d'images, de sorte à obtenir une troisième sous-séquence courante (SS₃) de résolution spatiale égale à la résolution spatiale d'entrée (RSE); et
∘ Lorsque la deuxième résolution temporelle (RT₂) de la troisième sous-séquence courante est inférieure à la résolution temporelle d'entrée (RT_{E}), reconstruction (R4₆) de la sous-séquence courante d'entrée par recopie temporelle d'au moins une image de la troisième sous-séquence entre deux images successives de la sous-séquence de sorte à obtenir une sous-séquence (SS_{E}) ayant la résolution temporelle d'entrée (RT_{E}).

11. Equipement émetteur (S) comprenant un module d'obtention (E/R) d'une séquence d'images d'entrée, **caractérisé en ce qu'**il comprend un dispositif (100) de formation d'une séquence d'images de sortie selon la revendication **9,** un module de stockage (MEM) d'un conteneur de sortie (C_{S}) comprenant la séquence de sortie et un module (E/R) d'émission du conteneur de sortie par l'intermédiaire d'un réseau de communication.

12. Equipement récepteur (CL) comprenant un module (E/R) de réception de données par l'intermédiaire d'un réseau de communication, **caractérisé en ce qu'**il est apte à recevoir un conteneur de sortie (C_{S}) comprenant une séquence d'images de sortie et **en ce qu'**il comprend un dispositif (200,300) de reconstruction d'une séquence d'entrée à partir de la séquence de sortie selon la revendication **10.**

13. Programme d'ordinateur (Pg1, Pg2, Pg3) comportant des instructions pour la mise en oeuvre du procédé selon l'une quelconque des revendications **1** à **8,** lorsque ledit programme est exécuté par un processeur.

## Patentansprüche

1. Verfahren zum Formen einer Bildsequenz, einer sogenannten Ausgangssequenz (Ss), aus einer Eingangsbildsequenz (S_{E}), wobei die Eingangsbildsequenz eine räumliche Eingangsauflösung (RS_{E}) und eine zeitliche Eingangsauflösung (RT_{E}) hat, wobei die Ausgangssequenz eine der zeitlichen Eingangsauflösung (RT_{E}) gleiche zeitliche Ausgangsauflösung (RT_{S}) und eine einem durch Teilung durch eine ganze Zahl größer als oder gleich 2 vorbestimmten Bruchteil der räumlichen Eingangsauflösung (RS_{E}) gleiche räumliche Ausgangsauflösung (RS_{S}) hat, **dadurch gekennzeichnet, daß** das Verfahren die folgenden Schritte aufweist, die für eine Untersequenz (SS_{E}) der Eingangssequenz durchgeführt werden, die als laufende Untersequenz bezeichnet wird und eine vorbestimmte Zahl (N) Bilder aufweist:
- Erhalten (E1) einer der Untersequenz zugeordneten Bildfrequenz (FI),
- Bearbeiten (E2) der laufenden Eingangsuntersequenz mit
• zeitlichem Unterabtasten (E21) der laufenden Untersequenz mit einer zeitlichen Unterabtastrate zwischen 1 und dem vorbestimmten Bruchteil, die mit der erhaltenen Bildfrequenz abnimmt, und Formen einer zweiten Untersequenz, die eine zweite zeitliche Auflösung (RT₂) hat,
• räumlichem Unterabtasten (E22) der geformten zweiten Untersequenz (SS₂) mit einer räumlichen Unterabtastrate zwischen 1 und dem vorbestimmten Bruchteil, die mit der erhaltenen Bildfrequenz zunimmt, so daß ein Produkt aus der zeitlichen und der räumlichen Abtastrate gleich dem vorbestimmten Bruchteil ist, und Formen einer dritten Untersequenz (SS₃) mit einer dritten räumlichen Auflösung (RS₃),
• wenn die dritte räumliche Auflösung (RS₃) größer als die räumliche Ausgangsauflösung (RS_{S}) ist, räumliches Aufteilen (E23) der Bilder der dritten Untersequenz (SS₃) in mindestens zwei Unterbilder und höchstens N Unterbilder mit einer der räumlichen Ausgangsauflösung (RS_{S}) gleichen räumlichen Auflösung und Formen (E2₆) der Ausgangsbilduntersequenz durch zeitliches Einfügen der durch Aufteilen erhaltenen Unterbilder zwischen dem aufgeteilten Bild und dem anschließenden Bild;
- Einbringen (E4) der Ausgangsuntersequenz (SS_{S}) und der zugeordneten Bildfrequenz (FI) in einen Ausgangsbehälter (C_{S}).

2. Verfahren zum Formen einer Ausgangssequenz gemäß Anspruch 1, **dadurch gekennzeichnet, daß** es außerdem einen Schritt (E3) des Kodierens der geformten Untersequenz und der zugeordneten Bildfrequenzinformation (FI) aufweist und daß der Einbringungsschritt (E4) die kodierten Daten in den Ausgangsbehälter (Cs) einbringt.

3. Verfahren zum Formen einer Ausgangssequenz gemäß einem der vorangehenden Ansprüche, **dadurch gekennzeichnet, daß** es außerdem einen vorausgehenden Schritt (E0) des Bestimmens der Bildfrequenz (FI) aufweist, der die folgenden Unterschritte aufweist:
- Extrahieren eines Vektors von Merkmalen je Bild und Formen eines Vektors von Merkmalen der laufenden Untersequenz aus den N Vektoren,
- Vorhersagen einer Bewegungsklasse der laufenden Untersequenz mittels des geformten Vektors und eines überwachten automatischen Vorhersagesystems,
- Bestimmen einer der vorhergesagten Bewegungsklasse zugeordneten Bildfrequenz.

4. Verfahren zum Formen einer Ausgangssequenz gemäß einem der Ansprüche 1 oder 2, das außerdem einen vorausgehenden Schritt des Bestimmens der Bildfrequenz (FI) für mindestens die Untersequenz (SS_{E}) der Eingangssequenz aufweist, wobei der vorausgehende Schritt die folgenden Schritte aufweist:
- für jedes Bild von mindestens einem Teil der Bilder der Untersequenz:
Extrahieren wenigstens einer ersten und einer zweiten Gesamtheit von Merkmalen,
- für die Untersequenz: Formen eines ersten Vektors von Merkmalen aus mindestens einem Teil der extrahierten ersten Gesamtheiten von Merkmalen für die betreffenden Bilder und eines zweiten Vektors von Merkmalen aus mindestens einem Teil der extrahierten zweiten Gesamtheiten von Merkmalen für die betreffenden Bilder,
- Vorhersagen einer Bewegungsklasse der betreffenden Untersequenz mittels mindestens eines ersten und eines zweiten Klassifizierungsverfahrens, wobei das erste Verfahren geeignet ist, aus dem ersten Vektor von Merkmalen für die Untersequenz mindestens eine erste Bewegungsklasse auszuwählen oder auch nicht, wobei das zweite Verfahren geeignet ist, wenn die erste Bewegungsklasse nicht ausgewählt worden ist, mindestens eine zweite oder eine dritte Bewegungsklasse auszuwählen,
- Erhalten der der ausgewählten Bewegungsklasse zugeordneten Bildfrequenz.

5. Verfahren zum Formen gemäß einem der vorangehenden Ansprüche, **dadurch gekennzeichnet, daß** es außerdem einen Schritt (E1') des Erhaltens einer eine Wechselwirkung zwischen einem Benutzer (IU) und der geformten Untersequenz darstellenden Information und einen Schritt des Entscheidens der Änderung der erhaltenen Bildfrequenz in Abhängigkeit von der erhaltenen Information aufweist.

6. Verfahren zum Formen gemäß einem der vorangehenden Ansprüche, **dadurch gekennzeichnet, daß** der vorbestimmte Bruchteil ein Viertel beträgt und daß die Schritte des räumlichen und des zeitlichen Unterabtastens drei verschiedene Unterabtastraten aufweisen.

7. Verfahren zum Rekonstruieren einer Bildsequenz, einer sogenannten Eingangssequenz (S_{E}), mit einer räumlichen Eingangsauflösung (RS_{E}) und einer zeitlichen Eingangsauflösung (RT_{E}) aus einem Ausgangsbehälter (C_{S}), mit einer Ausgangssequenz (Ss), die eine räumliche Ausgangsauflösung (RS_{S}) hat, die gleich 1/N der räumlichen Eingangsauflösung (RS_{E}) ist, wobei N eine ganze Zahl (N) größer als oder gleich 2 ist und eine zeitliche Ausgangsauflösung (RT_{S}) gleich der zeitlichen Eingangsauflösung (RT_{E}) ist,
**dadurch gekennzeichnet, daß** das Verfahren, während die Sequenz zeitlich in eine Vielzahl von Untersequenzen zerteilt ist, die folgenden Schritte aufweist, die für eine Untersequenz (SSᵢ) der Ausgangssequenz durchgeführt werden, die als laufende Untersequenz bezeichnet wird und eine vorbestimmte Anzahl Bilder aufweist:
- Erhalten (R1) der Untersequenz (SSᵢ) der Ausgangssequenz aus dem Ausgangsbehälter (Cs) und Erhalten (R2) einer Information, die für eine der laufenden Untersequenz zugeordnete Bildfrequenz (FI) steht,
- Bearbeiten (R3) der laufenden Untersequenz mit:
• wenn die laufende Untersequenz eine zugeordnete Bildfrequenz (FI) hat, die kleiner als die zeitliche Ausgangsauflösung ist, räumliches Rekonstruieren (R31) von mindestens zwei aufeinanderfolgenden Bildern der Untersequenz zu einem Bild mit einer zweiten räumlichen Auflösung (RS₂), die größer als die räumliche Ausgangsauflösung (RS_{S}) und kleiner als oder gleich der räumlichen Eingangsauflösung (RS_{E}) ist, um eine zweite laufende Untersequenz von Bildern mit einer zweiten zeitlichen Auflösung (RT₂) gleich der Bildfrequenz (FI) zu formen,
• wenn die zweite räumliche Auflösung (RS₂) kleiner als die räumliche Eingangsauflösung (RS_{E}) ist, räumliches Überabtasten (R32) der Bilder der zweiten laufenden Untersequenz mit einer räumlichen Überabtastrate zwischen 1 und der ganzen Zahl (N), die mit der Bildfrequenz steigt, um eine dritte laufende Untersequenz (SS₃) mit einer der räumlichen Eingangsauflösung (RSE) gleichen räumlichen Auflösung zu erhalten, und
• wenn die zweite zeitliche Auflösung (RT₂) der dritten laufenden Untersequenz kleiner als die zeitliche Eingangsauflösung (RT_{E}) ist, Rekonstruieren (R33) der laufenden Eingangsuntersequenz durch zeitliches Kopieren wenigstens eines Bildes der dritten Untersequenz zwischen zwei aufeinanderfolgende Bilder der Untersequenz, um eine Untersequenz (SS_{E}) zu erhalten, die die zeitliche Eingangsauflösung (RT_{E}) hat.

8. Verfahren zum Rekonstruieren einer Bildsequenz gemäß Anspruch 7, **dadurch gekennzeichnet, daß** das Verfahren, wenn der Behälter (Cs) kodierte Daten enthält, einen Schritt des Dekodierens (R0, R2') von kodierten Daten der Ausgangssequenz aufweist.

9. Vorrichtung (100) zum Formen einer als Ausgangssequenz (Ss) bezeichneten Bildsequenz aus einer Eingangsbildsequenz (S_{E}), wobei die Eingangsbildsequenz eine räumliche Eingangsauflösung (RS_{E}) und eine zeitliche Eingangsauflösung (RT_{E}) hat, wobei die Ausgangsuntersequenz eine der zeitlichen Eingangsauflösung (RT_{E}) gleiche zeitliche Ausgangsauflösung (RT_{S}) und eine einem durch Teilung durch eine ganze Zahl größer als oder gleich 2 vorbestimmten Bruchteil der räumlichen Eingangsauflösung (RS_{E}) gleiche räumliche Ausgangsauflösung (RS_{S}) hat,
**dadurch gekennzeichnet, daß** die Vorrichtung für eine Untersequenz (SS_{E}) der Eingangssequenz, die als laufende Untersequenz bezeichnet wird und eine vorbestimmte Zahl (N) Bilder aufweist, zu Folgendem ausgelegt ist:
- Erhalten (OBT.SS_{E}) einer als laufende Eingangsuntersequenz (SS_{E}) bezeichneten Untersequenz der Eingangssequenz und einer der Untersequenz zugeordneten Bildfrequenz (FI),
- Bearbeiten (PREP.SS_{E}) der laufenden Eingangsuntersequenz mit
• zeitlichem Unterabtasten (E21) der laufenden Untersequenz mit einer zeitlichen Unterabtastrate zwischen 1 und dem vorbestimmten Bruchteil, die mit der erhaltenen Bildfrequenz abnimmt, und Erhalten einer zweiten Untersequenz, die eine zweite zeitliche Auflösung (RT₂) hat,
• räumlichem Unterabtasten (E22) der zweiten Untersequenz (SS₂) mit einer zeitlichen Unterabtastrate zwischen 1 und dem vorbestimmten Bruchteil, die mit der Bildfrequenz zunimmt, so daß ein Produkt aus der zeitlichen und der räumlichen Abtastrate gleich dem vorbestimmten Bruchteil ist, und Erhalten einer dritten Untersequenz (SS₃) mit einer dritten räumlichen Auflösung (RS₃),
• wenn die dritte räumliche Auflösung (RS₃) größer als die räumliche Ausgangsauflösung (RS_{S}) ist, räumliches Aufteilen (E2₅) der Bilder der dritten Untersequenz (SS₃) in mindestens zwei Unterbilder mit einer der räumlichen Ausgangsauflösung (RS_{S}) gleichen räumlichen Auflösung und Formen (E2₆) der Ausgangsbilduntersequenz durch zeitliches Einfügen der durch Aufteilen erhaltenen Unterbilder zwischen dem aufgeteilten Bild und dem anschließenden Bild;
- Einbringen (INS.SS_{E}) der Ausgangsuntersequenz (SS_{S}) und der zugeordneten Bildfrequenz (FI) in einen Ausgangsbehälter (C_{S}).

10. Vorrichtung (200) zum Rekonstruieren einer als Eingangssequenz bezeichneten Bildsequenz mit einer räumlichen Eingangsauflösung (RS_{E}) und einer zeitlichen Eingangsauflösung (RT_{E}), von einem Ausgangsbehälter (Cs) ausgehend, mit einer Ausgangssequenz, die eine räumliche Ausgangsauflösung (RS_{S}), die gleich 1/N der räumlichen Eingangsauflösung (RS_{E}) ist, wobei N eine ganze Zahl (N) größer als oder gleich 2 ist, und eine zeitliche Ausgangsauflösung (RTs), die gleich der zeitlichen Eingangsauflösung (RT_{E}) ist, hat,
**dadurch gekennzeichnet, daß** die Vorrichtung, während die Bildsequenz zeitlich in eine Anzahl Untersequenzen aufgeteilt ist, dazu ausgelegt ist:
- aus dem Ausgangsbehälter (Cs) eine Untersequenz der Ausgangssequenz zu erhalten (OBT.SSs) und eine die der als laufende Untersequenz bezeichneten Untersequenz zugeordnete Bildfrequenz (FI) darstellende Information zu erhalten (OBT.FI),
- die laufende Untersequenz zu bearbeiten (POSTP.SS_{S}) mit:
• wenn die laufende Untersequenz eine zugeordnete Bildfrequenz (F1) hat, die kleiner als die zeitliche Ausgangsauflösung ist, räumliches Wiederzusammensetzen (R4₂) von mindestens zwei aufeinanderfolgenden Bildern der Untersequenz zu einem Bild mit einer zweiten räumlichen Auflösung (RS₂), die größer als die räumliche Ausgangsauflösung (RS_{S}) und kleiner als oder gleich der räumlichen Eingangsauflösung (RS_{E}) ist, um eine zweite laufende Untersequenz von Bildern mit einer zweiten zeitlichen Auflösung (RT₂) gleich der Bildfrequenz (F1) zu formen,
• wenn die zweite räumliche Auflösung (RS₂) kleiner als die räumliche Eingangsauflösung (RS_{E}) ist, räumliches Überabtasten (R4₄) der Bilder der zweiten laufenden Untersequenz mit einer räumlichen Überabtastrate zwischen 1 und der ganzen Zahl (N), die mit der Bildfrequenz steigt, um eine dritte laufende Untersequenz (SS₃) mit einer der räumlichen Eingangsauflösung (RS_{E}) gleichen räumlichen Auflösung zu erhalten, und
• wenn die zweite zeitliche Auflösung (RT₂) der dritten laufenden Untersequenz kleiner als die zeitliche Eingangsauflösung (RT_{E}) ist, Rekonstruieren (R4₆) der laufenden Eingangsuntersequenz durch zeitliches Kopieren wenigstens eines Bildes der dritten Untersequenz zwischen zwei aufeinanderfolge Bilder der Untersequenz, um eine Untersequenz (SS_{E}) zu erhalten, die die zeitliche Eingangsauflösung (RT_{E}) hat.

11. Sendeausrüstung (S) mit einem Modul (E/R) zum Erhalten einer Eingangsbildsequenz, **dadurch gekennzeichnet, daß** sie eine Vorrichtung (100) zum Formen einer Ausgangsbildsequenz gemäß Anspruch 9, ein Lagerungsmodul (MEM) eines Ausgangsbehälters (Cs) mit der Ausgangssequenz und ein Sendemodul (E/R) des Ausgangsbehälters über ein Kommunikationsnetz aufweist.

12. Empfangsausrüstung (CL) mit einem Modul (E/R) zum Empfangen von Daten über ein Kommunikationsnetz, **dadurch gekennzeichnet, daß** sie dazu ausgelegt ist, einen eine Ausgangsbildsequenz enthaltenden Ausgangsbehälter (Cs) aufzunehmen, und daß sie eine Vorrichtung (200, 300) zum Rekonstruieren einer Eingangssequenz aus der Ausgangssequenz gemäß Anspruch 10 aufweist.

13. Computerprogramm (Pg1, Pg2, Pg3) mit Befehlen zum Durchführen des Verfahrens gemäß einem der Ansprüche 1 bis 8, wenn das Programm von einem Prozessor durchgeführt wird.

## Claims

1. A method for forming a frame sequence, called output sequence (Ss), from an input frame sequence (S_{E}), said input frame sequence having an input spatial resolution (RSε) and an input temporal resolution (RTε), said output sequence having an output temporal resolution (RT_{S}) equal to the input temporal resolution (RT_{E}) and an output spatial resolution (RSs) equal to a predetermined fraction of the input spatial resolution (RSε) by an integer number higher than or equal to 2,
**characterised in that** the method comprises the following steps, implemented for a sub-sequence (SSε) of the input sequence, called current sub-sequence and comprising a predetermined number of frames (N):
- Obtaining (E1) a frame rate (FI), associated with said sub-sequence;
- Processing (E2) the current input sub-sequence, comprising:
∘ temporally sub-sampling (E21) the current sub-sequence with a temporal sub-sampling rate comprised between 1 and the predetermined fraction, decreasing with the frame rate obtained, and forming a second sub-sequence having a second temporal resolution (RT₂);
∘ spatially sub-sampling (E22) the formed second sub-sequence (SS₂) with a spatial sub-sampling rate comprised between 1 and the predetermined fraction, increasing with the frame rate, so that a product of the temporal and spatial sampling rates is equal to the predetermined fraction and forming a third sub-sequence (SS₃) having a third spatial resolution (RS₃);
∘ when the third spatial resolution (RSs) is higher than the output spatial resolution (RSs), spatially decomposing (E23) the frames of the third sub-sequence (SS₃) into at least two sub-frames and at most N sub-frames of spatial resolution equal to the output spatial resolution (RSs) and forming (E2e) the output frame sub-sequence by temporally inserting the sub-frames resulting from the decomposition between the decomposed frame and the following frame; and
- inserting (E4) the output sub-sequence (SS_{S}) and the associated frame rate (FI) into an output container (Cs).

2. A method for forming an output sequence according to claim 1, **characterised in that** it further comprises a step (E3) of encoding the formed sub-sequence and the associated frame rate (FI) information and **in that** the insertion step (E4) inserts the encoded data into the output container (Cs).

3. A method for forming an output sequence according to one of the preceding claims, **characterised in that** it further comprises a preliminary step (E0) of determining the frame rate (FI) that comprises the following sub-steps:
- extracting one feature vector per frame and forming a feature vector of the current sub-sequence from the N vectors;
- predicting a class of movement of the current sub-sequence using the formed vector and a supervised automatic prediction system;
- determining a frame rate associated with the predicted class of movement.

4. A method for forming an output sequence according to one of claims 1 or 2, further comprising a preliminary step of determining the frame rate (FI) for at least said sub-sequence (SSε) of the input sequence, said preliminary step comprising the following steps:
- extracting, for each frame of at least a part of the frames of said sub-sequence, at least a first and a second feature sets;
- forming, for said sub-sequence, a first feature vector from at least a part of the first feature sets extracted for the considered frames and a second feature vector from at least a part of the second feature sets extracted for the considered frames;
- predicting a class of movement of the considered sub-sequence by means of at least a first and a second classification method, the first method being adapted to select or not, from the first feature vector, at least a first class of movement for said sub-sequence, the second method being adapted to select, if said first class of movement is not selected, at least a second or a third class of movement;
- obtaining the frame rate associated with the class of movement selected.

5. A forming method according to one of the preceding claims, **characterised in that** it further comprises a step (E1') of obtaining information representative of an interaction of a user (IU) with the formed sub-sequence and a step of deciding whether to modify the obtained frame rate as a function of said obtained information.

6. A forming method according to one of the preceding claims, **characterised in that** the predetermined fraction is equal to 1/4, and **in that** the spatial and temporal sub-sampling steps comprise three distinct sub-sampling rate values.

7. A method for reconstructing a frame sequence, called input sequence (S_{E}), having an input spatial resolution (RSε) and an input temporal resolution (RTε), from an output container (Cs), comprising an output sequence (Ss) having an output spatial resolution (RSs) equal to 1/N times the input spatial resolution (RS_{E}) with N an integer number higher than or equal to 2, and an output temporal resolution (RT_{S}) equal to the input temporal resolution (RTε),
**characterised in that**, said sequence being temporally cut into a plurality of sub-sequences, said method comprises the following steps, implemented for a sub-sequence (SSᵢ) of the output sequence, called current sub-sequence and comprising a predetermined number of frames:
- obtaining (R1) the sub-sequence (SSᵢ) of the output sequence from the output container (CS) and obtaining (R2) information representative of a frame rate (FI) associated with said current sub-sequence;
- processing (R3) the current sub-sequence comprising:
∘ when the current sub-sequence has an associated frame rate (FI) that is lower than the output temporal resolution, spatially recomposing (R31) at least two successive frames of the sub-sequence into a frame of second spatial resolution (RS₂) higher than the output spatial resolution (RSs) and lower than or equal to the input spatial resolution (RS_{E}) so as to form a second current frame sub-sequence of second temporal resolution (RT₂) equal to the frame rate (FI);
∘ when the second spatial resolution (RS₂) is lower than the input spatial resolution (RS_{E}), spatially over-sampling (R32) the frames of the second current sub-sequence with a spatial over-sampling rate comprised between 1 and the integer number (N), which increases with the frame rate so as to obtain a third current sub-sequence (SS₃) of spatial resolution equal to the input spatial resolution (RS_{E}); and
∘ when the second temporal resolution (RT₂) of the third current sub-sequence is lower than the input temporal resolution (RTε), reconstructing (R33) the input current sub-sequence by temporal recopy of at least one frame of the third sub-sequence between two successive frames of the sub-sequence so as to obtain a sub-sequence (SSε) having the input temporal resolution (RTε).

8. A method for reconstructing a frame sequence according to claim 7, **characterised in that**, the container (Cs) comprising encoded data, the method comprises a step (R0, R2') of decoding encoded data of the output sequence.

9. A device (100) for forming a frame sequence, called output sequence (Ss), from an input frame sequence (S_{E}), said input frame sequence having an input spatial resolution (RSε) and an input temporal resolution (RTε), said output sub-sequence having an output temporal resolution (RT_{S}) equal to the input temporal resolution (RT_{E}) and an output spatial resolution (RSs) equal to a predetermined fraction of the input spatial resolution (RSε) by an integer number higher than or equal to 2,
**characterised in that**, for a sub-sequence (SSε) of the input sequence, called current sub-sequence and comprising a predetermined number of frames (N), the device is configured for:
- obtaining (OBT. SS_{E}) a sub-sequence of the input sequence, called current input sequence (SSε) and a frame rate (FI), associated with said sub-sequence;
- processing (PREP. SS_{E}) the current input sub-sequence, comprising:
∘ temporally sub-sampling (E21) the current sub-sequence with a temporal sub-sampling rate comprised between 1 and the predetermined fraction, decreasing with the frame rate, and obtaining a second sub-sequence having a second temporal resolution (RT₂);
∘ spatially sub-sampling (E22) the second sub-sequence (SS₂) with a temporal sub-sampling rate comprised between 1 and the predetermined fraction, increasing with the frame rate, so that a product of the temporal and spatial sampling rates is equal to the predetermined fraction and obtaining a third sub-sequence (SS₃) having a third spatial resolution (RS₃);
∘ when the third spatial resolution (RSs) is higher than the output spatial resolution (RSs), spatially decomposing (E2s) the frames of the third sub-sequence (SS₃) into at least two sub-frames of spatial resolution equal to the output spatial resolution (RSs) and forming (E2₆) the output frame sub-sequence by temporally inserting sub-frames resulting from the decomposition between the decomposed frame and the following frame;
- inserting (INS. SS_{E}) the output sub-sequence (SS_{S}) and the associated frame rate (FI) in an output container (Cs).

10. A device (200) for reconstructing a frame sequence, called input sequence, having an input spatial resolution (RSε) and an input temporal resolution (RTε), from an output container (CS), comprising an output sequence having an output spatial resolution (RSs) equal to 1/N times the input spatial resolution (RS_{E}) with N an integer number (N) higher than or equal to 2 and an output temporal resolution (RSs) equal to the input temporal resolution (RTε),
**characterised in that**, said sequence being temporally cut into a plurality of sub-sequences, said device being configured for:
- obtaining (OBT. SSs) a sub-sequence of the output sequence from the output container (CS) and obtaining (OBT. FI) information representative of a frame rate (FI) associated with said sub-sequence, called current sub-sequence;
- processing (POSTP. SSs) the current sub-sequence comprising:
∘ when the current sub-sequence has an associated frame rate (FI) that is lower than the output temporal resolution, spatially recomposing (R4₂) at least two successive frames of the sub-sequence into a frame of second spatial resolution (RS₂) higher than the output spatial resolution (RSs) and lower than or equal to the input spatial resolution (RS_{E}) so as to form a second current frame sub-sequence of second temporal resolution (RT₂) equal to the frame rate (FI);
∘ when the second spatial resolution (RS₂) is lower than the input spatial resolution (RS_{E}), spatially over-sampling (R4₄) the frames of the second current sub-sequence with a spatial over-sampling rate comprised between 1 and the integer number (N), which increases with the frame rate, so as to obtain a third current sub-sequence (SS₃) of spatial resolution equal to the input spatial resolution (RS_{E}); and
∘ when the second temporal resolution (RT₂) of the third current sub-sequence is lower than the input temporal resolution (RTε), reconstructing (R4₆) the input current sub-sequence by temporal recopy of at least one frame of the third sub-sequence between two successive frames of the sub-sequence so as to obtain a sub-sequence (SSε) having the input temporal resolution (RTε).

11. A transmitter appliance (S) comprising a module (E/R) for obtaining an input frame sequence, **characterised in that** it comprises a device (100) for forming an output frame sequence according to claim 9, a module (MEM) for storing an output container (Cs) comprising the output sequence and a module (E/R) for transmitting the output container through a communication network.

12. A receiver appliance (CL) comprising a module (E/R) for receiving data through a communication network, **characterised in that** it is adapted to receive an output container (Cs) comprising an output frame sequence, and **in that** it comprises a device (200, 300) for reconstructing an input sequence from the output sequence according to claim 10.

13. A computer program (Pg1, Pg2, Pg3) including instructions for implementing the method according to any one of claims 1 to 8, when said program is executed by a processor.
